(19) Europäisches Patentamt
European Patent Office
Office européen des brevets

(11) EP 0 441 197 B1

(12) EUROPÄISCHE PATENTSCHRIFT

(45) Veröffentlichungstag und Bekanntmachung des Hinweises auf die Patenterteilung:
**03.01.1996 Patentblatt 1996/01**

(51) Int Cl.$^6$: **C08F 251/00**, C11D 3/37, C11D 3/22

(21) Anmeldenummer: **91100944.7**

(22) Anmeldetag: **25.01.1991**

(54) **Propfcopolymerisate von Monosacchariden, Oligosacchariden, Polysacchariden und modifizierten Polysacchariden, Verfahren zu ihrer Herstellung und ihre Verwendung**

Graftcopolymer of monosaccharides, oligosaccharides, polysaccharides and modified polysaccharides, process of preparing same and its application

Copolymère greffé à base de monosaccharides, oligosaccharides, polysaccharides et de polysaccharides modifiées, procédé de fabrication de celle-ci et son utilisation

(84) Benannte Vertragsstaaten:
**BE CH DE ES FR GB IT LI NL SE**

(30) Priorität: **03.02.1990 DE 4003172**

(43) Veröffentlichungstag der Anmeldung:
**14.08.1991 Patentblatt 1991/33**

(73) Patentinhaber: **BASF Aktiengesellschaft**
**D-67063 Ludwigshafen (DE)**

(72) Erfinder:
- **Denzinger, Walter**
  **W-6720 Speyer (DE)**
- **Hartmann, Heinrich, Dr.**
  **W-6703 Limburgerhof (DE)**
- **Kud, Alexander, Dr.**
  **W-6709 Eppelsheim (DE)**
- **Baur, Richard, Dr.**
  **W-6704 Mutterstadt (DE)**
- **Feldmann, John, Dr.**
  **W-6800 Mannheim 1 (DE)**
- **Raubenheimer, Hans-Juergen**
  **W-6834 Ketsch (DE)**

(56) Entgegenhaltungen:
**EP-A- 0 025 551**
**EP-A- 0 075 820**
**EP-A- 0 404 377**
**US-A- 3 558 499**

- **WORLD PATENTS INDEX LATEST, Woche 8613, 13. Februar 1986, Derwent Publications Ltd., London, GB; AN 86-085028; & JP-A- 61 031 498**
- **WORLD PATENTS INDEX LATEST, Woche 8106, 4. Dezember 1980, Derwent Publications Ltd., London, GB; AN 81-08817D; & JP-A- 55 155 097**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 441 197 B1

## Beschreibung

Aus der US-PS 3 558 499 sind Waschmittel bekannt, die als wesentliche Bestandteile etwa 10 bis etwa 25 % eines anionischen oder nichtionischen oberflächenaktiven Mittels, etwa 60 bis etwa 89,9 % eines anorganischen Builders, wie Natriumtripolyphosphat, Natriumcarbonat oder Natriumsilikat und etwa 0,1 bis etwa 10 Gew.% eines Vergrauungsinhibitors enthalten. Der Vergrauungsinhibitor besteht aus einem Pfropfpolymerisat von Stärke mit Acrylsäure oder Methacrylsäure. Der Gehalt an polymerisierter Acrylsäure oder Methacrylsäure im Pfropfpolymerisat beträgt etwa 1 bis 50 %.

Aus der JP-A-55/155 097 sind Waschmittelformulierungen bekannt, die zur Unterdrückung der Wiederanschmutzung von Wäsche beim Waschen 0,05 bis 5 Gew.% einer gepfropften Stärke enthalten, die durch Polymerisieren von 0,5 bis 100 Gew.-Teilen eines wasserlöslichen Monomeren oder durch Hydrolyse wasserlöslich werdenden Monomeren in Gegenwart von 100 Gew.-Teilen Stärke hergestellt werden. Gemäß den Angaben in den Beispielen wurde eine mit Natriumacrylat gepfropfte oxidierte Stärke (8 Gew.-Teile Natriumacrylat auf 100 Gew.-Teile oxidierte Stärke) und eine mit Hydroxypropylmethacrylat gepfropfte oxidierte Stärke (2,5 Gew.-Teile Hydroxypropylacrylat pro 100 Gew.-Teile Stärke) und ein Maisstärke-Polyvinylalkohol-Pfropfpolymerisat (100 Gew.-Teile Maisstärke/5 Gew.-Teile Vinylacetat, 63 % Hydrolysegrad) verwendet.

Aus der JP-A-61/031 498 sind Waschmittel bekannt, die als Builder 0,5 bis 50 Gew.% an Pfropfpolymerisaten aus einem Monosaccharid und/oder einem Oligosaccharid und einem wasserlöslichen ethylenisch ungesättigten Monomer enthalten. Gemäß den Beispielen wurde Acrylsäure auf Saccharose oder Glukose gepfropft. Wie die Beispiele und Vergleichsbeispiele dieser Veröffentlichung zeigen, erhöht ein Zusatz von Polyacrylsäure zu einer Waschmittelformulierung die Waschkraft stärker als der Zusatz der gleichen Menge einer mit Acrylsäure oder Methacrylsäure gepfropften Stärke. Im Gegensatz zu der praktisch nicht biologisch abbaubaren Polyacrylsäure sollen die gepfropften Stärken zu einem hohen Teil biologisch abbaubar sein.

Aus der EP-PS 0 075 820 ist die Herstellung von Copolymerisaten aus monoethylenisch ungesättigten Dicarbonsäuren und monoethylenisch ungesättigten Monocarbonsäuren bekannt. Bei diesem bekannten Herstellverfahren beträgt der Neutralisationsgrad der Carbonsäuregruppen der Monomeren während der Polymerisation 20 bis 80 %. Man erhält auf diese Weise Copolymerisate mit geringen Gehalten an restlicher Dicarbonsäure.

Aus der EP-PS 0 025 551 ist die Verwendung von Copolymerisaten aus beispielsweise Maleinsäure und Acrylsäure als Inkrustationsinhibitoren in Waschmitteln bekannt.

Der vorliegenden Erfindung liegt die Aufgabe zugrunde, neue Stoffe zur Verfügung zu stellen, die bei der Anwendung in Waschmitteln gegenüber vergleichbaren bekannten Produkten eine verbesserte Wirksamkeit aufweisen. Die neuen Stoffe sollen außerdem möglichst weitgehend biologisch abbaubar oder zumindest aus dem Abwasser von Kläranlagen eliminierbar sein. Ein weiteres Ziel ist der Einsatz hoher Mengen an nachwachsenden Rohstoffen zur weiteren Verbesserung der ökologischen Akzeptanz bei vergleichbarem Eigenschaftsprofil zu rein synthetischen Waschmittel-Additiven.

Die Aufgabe wird erfindungsgemäß gelöst mit Pfropfcopolymerisaten von Monosacchariden, Oligosacchariden, Polysacchariden und den unter (B) angegebenen Derivaten, die erhältlich sind durch radikalisch initiierte Copolymerisation von

(A) Monomermischungen aus

(a) 90 bis 10 Gew.% monoethylenisch ungesättigten $C_4$- bis $C_8$-Dicarbonsäuren, deren Anhydriden oder Alkali- und/oder Ammoniumsalzen,

(b) 10 bis 90 Gew.% Acrylsäure, Methacrylsäure, Dimethylacrylsäure, Ethylacrylsäure, Allylessigsäure, Vinylessigsäure, deren Gemische oder deren Alkali- und/oder Ammoniumsalzen,

(c) 0 bis 40 Gew.% anderen monoethylenisch ungesättigten Monomeren, die mit den Monomeren (a) und (b), copolymerisierbar sind, und

(d) 0 bis 5 Gew.% mindestens zwei ethylenisch ungesättigte Doppelbindungen im Molekül aufweisende Monomere

in Gegenwart von

(B) Monosacchariden, Oligosacchariden, Polysacchariden, thermisch und/oder mechanisch behandelten, oxidativ, hydrolytisch oder enzymatisch abgebauten Polysacchariden, oxidierten hydrolytisch oder enzymatisch abgebauten Polysacchariden, chemisch modifizierten Mono-, Oligo- und Polysacchariden oder Mischungen der genannten Verbindungen

im Gewichtsverhältnis (A) : (B) von (95 bis 20):(5 bis 80).

Diese Pfropfcopolymerisate werden als Zusatz zu Wasch- und Reinigungsmitteln in Mengen von 0,1 bis 20 Gew.%, bezogen auf die jeweiligen Formulierungen, verwendet.

Die Pfropfcopolymerisate sind durch Copolymerisation von (A) Monomermischungen in Gegenwart von (B) Naturstoffen auf Basis von Mono-, Oligo- und Polysacchariden und deren Derivaten erhältlich. Die Monomermischungen (A) enthalten als Monomere der Gruppe (a) monoethylenisch ungesättigte $C_4$- bis $C_8$-Dicarbonsäuren, deren Anhydride oder die Alkali- und/oder Ammoniumsalze der Dicarbonsäuren. Geeignete Dicarbonsäuren sind beispielsweise Maleinsäure, Fumarsäure, Itaconsäure, Mesaconsäure, Methylenmalonsäure, Citraconsäure, Maleinsäureanhydrid, Itaconsäureanhydrid und Methylenmalonsäureanhydrid. Die ethylenisch ungesättigten Dicarbonsäuren können in Form der freien Säuren oder in mit Alkalimetallbasen, Ammoniak oder Aminen neutralisierter Form bei der Copolymerisation eingesetzt werden. Vorzugsweise verwendet man als Monomer der Gruppe (a) Maleinsäure, Maleinsäureanhydrid, Itaconsäure, Itaconsäureanhydrid sowie die Natrium-, Kali- oder Ammoniumsalze von Maleinsäure bzw. Itaconsäure. Diese Salze sind beispielsweise in einfacher Weise aus Maleinsäureanhydrid bzw. Itaconsäureanhydrid dadurch erhältlich, daß man die genannten Anhydride in wäßriger Lösung mit Natronlauge, Kalilauge oder Ammoniak neutralisiert. Die Monomeren der Gruppe (a) sind zu 10 bis 90, vorzugsweise 12 bis 80 Gew.% und besonders bevorzugt 15 bis 60 Gew.-% in der Monomermischung enthalten.

Als Monomere der Gruppe (b) kommen Acrylsäure, Methacrylsäure, Dimethylacrylsäure, Ethylacrylsäure, Allylessigsäure und Vinylessigsäure, deren Gemische oder deren Alkali- und/oder Ammoniumsalze in Betracht. Vorzugsweise verwendet man aus dieser Gruppe von Monomeren Acrylsäure, Methacrylsäure, deren Gemische sowie die Natrium-, Kali- oder Ammoniumsalze oder deren Mischungen.

Zu den Monomeren der Gruppe (c), die bei der Pfropfcopolymerisation gegebenenfalls eingesetzt werden, gehören beispielsweise $C_1$- bis $C_6$-Alkyl- und Hydroxyalkylester der unter (a) und (b) genannten Verbindungen, z.B. Methylacrylat, Ethylacrylat, n-Butylacrylat, Methylmethacrylat, Maleinsäuremonomethylester, Maleinsäuredimethylester, Maleinsäuremonoethylester, Maleinsäurediethylester, Hydroxyethylacrylat, Hydroxypropylacrylate, Hydroxybutylacrylate, Hydroxyethylmethacrylat und Hydroxypropylmethacrylate. Außerdem kommen die Amide und N-substituierten Alkylamide der unter (a) und (b) angegebenen Verbindungen als Monomere der Gruppe (c) in Betracht, z.B. Acrylamid, Methacrylamid, N-Alkylacrylamide mit 1 bis 18 C-Atomen in der Alkylgruppe, wie beispielsweise N-Methylacrylamid, N-Dimethylacrylamid, N-tert.-Butylacrylamid, N-Octadecylacrylamid, Maleinsäuremonoethylhexylamid, Maleinsäuremonododecylamid, Dimethylaminopropylmethacrylamid und Acrylamidoglykolsäure. Außerdem eignen sich als Monomere der Gruppe (c) Sulfogruppen enthaltende Monomere, wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester und Acrylamidomethylpropansulfonsäure sowie Phosphonsäuregruppen enthaltende Monomere, wie beispielsweise Vinylphosphonsäure, Allylphosphonsäure und Acrylamidomethylpropanphosphonsäure. Zu dieser Gruppe von Monomeren gehören außerdem N-Vinylpyrrolidon, N-Vinylcaprolactam, N-Vinylformamid, N-Vinyl-N-methylformamid, 1-Vinylimidazol, 1-Vinyl-2-methylimidazol, Vinylacetat und Vinylpropionat. Als Monomere der Gruppe (c) eignen sich außerdem die Ester von alkoxylierten $C_1$- bis $C_{18}$-Alkoholen, die mit 2 bis 50 Mol Ethylenoxid, Propylenoxid, Butylenoxid oder Mischungen davon umgesetzt sind, mit den monoethylenisch ungesättigten Carbonsäuren der Gruppen (a) und (b), z.B. die Ester der Acrylsäure, Methacrylsäure oder Maleinsäure mit einem $C_{13}/C_{15}$-Oxoalkohol, der mit unterschiedlichen Mengen an Ethylenoxid zur Reaktion gebracht wurde, z.B. 3 Mol, 5 Mol, 7 Mol, 10 Mol oder 30 Mol Ethylenoxid.

Von den Estern der Dicarbonsäuren kommen sowohl die Mono- als auch die Diester in Betracht.

Weiterhin kommen als Monomere der Gruppe (c) Amide von monoethylenisch ungesättigten $C_3$- bis $C_8$-Carbonsäuren mit Amidgruppen der Struktur

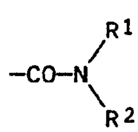 (I)

in Betracht, in der

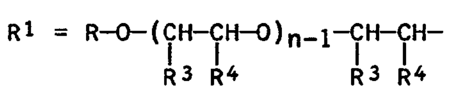 ,

$R^3$, $R^4$ = H, $CH_3$, $C_2H_5$,
R = $C_1$- bis $C_{28}$-Alkyl,
n = 2 bis 100 und
$R^2$ = H, $R^1$
bedeuten.

Die Monomeren der Komponente (c) werden lediglich gegebenenfalls zur Modifizierung der Pfropfcopolymerisate eingesetzt und sind in solchen Fällen bis zu 40 Gew.% in den bei der Polymerisation eingesetzten Monomermischungen enthalten.

Die bevorzugten Monomeren der Gruppe (c) sind Hydroxyethylacrylat. Hydroxypropylacrylate, Vinylacetat, N-Vinylpyrrolidon und Acrylamidomethylpropansulfonsäure.

Eine weitere Modifizierung der Pfropfcopolymerisate kann dadurch erreicht werden, daß die Monomermischungen gegebenenfalls bis zu 5 Gew.% eines mindestens zwei ethylenisch ungesättigte nicht-konjugierte Doppelbindungen im Molekül aufweisenden Monomer enthalten. Diese Verbindungen werden üblicherweise bei Copolymerisationen als Vernetzer verwendet. Sie können in den zur Copolymerisation eingesetzten Monomermischungen aus (a) und (b) oder den Monomermischungen aus (a), (b) und (c) zugesetzt werden. Im Falle ihres Einsatzes beträgt die bevorzugt verwendete Menge 0,05 bis 2 Gew.%. Die Mitverwendung der Monomeren der Gruppe (d) während der Copolymerisation bewirkt eine Erhöhung der K-Werte der Copolymerisate. Geeignete Verbindungen dieser Art sind beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3.000.

Die Polymerisation der Monomeren (a) und (b) sowie gegebenenfalls noch zusätzlich (c) und (d) erfolgt in Gegenwart von Naturstoffen auf Basis von Polysacchariden, Oligosacchariden, Monosacchariden und deren Derivaten. Die Naturstoffe sind z.B. Saccharide pflanzlichen oder tierischen Ursprungs oder Produkte des Stoffwechsels von Mikroorganismen sowie deren Abbau und Modifizierungsprodukte, die bereits in Wasser oder Alkalien dispergierbar oder löslich sind oder während der Polymerisation der Monomeren (a) und (b) und gegebenenfalls (c) und/oder (d) direkt oder in teilweiser oder völlig mit Alkalien, Ammoniak oder Aminen neutralisierter Form dispergierbar oder löslich werden.

Es sind dies beispielsweise Pektin, Algin, Chitin, Chitosan, Heparin, Carrageenan, Agar, Gummiarabicum, Tragant, Karaya-Gummi, Ghatti-Gummi, Johannisbrotkornmehl, Guar-Gummi, Tara-Gummi, Inulin, Xanthan, Dextran, Nigeran und Pentosane wie Xylan und Araban, deren Hauptbestandteile aus D-Glukuronsäure, D-Galakturonsäure, D-Galakturonsäuremethylester, D-Mannuronsäure, L-Guluronsäure, D- und L-Galaktose, 3,6-Anhydro-D-galaktose, L-Arabinose, L-Rhamnose, D-Glucuronsäure, D-Xylose, L-Fucose, D-Mannose, D-Fructose und D-Glucose, 2-Amino-2-Desoxi-D-Glukose und 2-Amino-2-Desoxi-D-Galaktose sowie deren N-Acetylderivate, bestehen.

Vom wirtschaftlichen Standpunkt aus gesehen verwendet man als Polysaccharide der Komponente (B) bei der Pfropfcopolymerisation vorzugsweise Stärke, thermisch und/oder mechanisch behandelte Stärke, oxidativ, hydrolytisch oder enzymatisch abgebaute Stärken, oxidierte hydrolytisch oder oxidierte enzymatisch abgebaute Stärken sowie chemisch modifizierte Stärken und chemisch modifizierte Monosaccharide und Oligosaccharide. Prinzipiell sind alle Stärken geeignet. Bevorzugt werden jedoch Stärken aus Mais, Weizen, Reis, Tapioka und insbesondere Stärke aus Kartoffeln. Die Stärken sind praktisch nicht in Wasser löslich und können in bekannter Weise durch thermische und/oder mechanische Behandlung oder durch einen enzymatischen oder einen säurekatalysierten Abbau in eine wasserlösliche Form überführt werden. Als Stärkeabbauprodukte, die entweder durch oxidativen, hydrolytischen oder enzymatischen Abbau von Stärke erhältlich sind, seien beispielsweise folgende Verbindungen genannt: Dextrine, wie Weiß- und Gelbdextrine, Maltodextrine, Glucosesirupe, Maltosesirupe, Hydrolysate von hohem Gehalt an D-Glucose sowie Maltose und D-Glucose und deren Isomerisierungsprodukt Fruktose. Als Komponente (B) eignen sich selbstverständlich auch Mono- und Oligosaccharide, wie Galaktose, Mannose, Ribose, Saccharose, Raffinose, Laktose und Trehalose sowie Abbauprodukte der Cellulose, beispielsweise Cellubiose und ihre Oligomeren.

Farblose oder nur schwach gelb gefärbte wäßrige Lösungen der Pfropfpolymeriste werden insbesondere dann erhalten, wenn man als Komponente (B) säurekatalytisch oder enzymatisch abgebaute Stärken einsetzt. Solche abgebauten Stärken sind im Handel unter der Bezeichnung Stärkeverzuckerungsprodukte erhältlich. Sie enthalten 0,5 bis 95, vorzugsweise 8 bis 20 Gew.-% Dextrose und 3 bis 30, vorzugsweise 5 bis 20 Gew.-% Maltose, 2 bis 90 Gew.-% Maltotriose und höhere Zucker.

Als Komponente (B) kommen ebenso oxidierte Stärken, wie z.B. Dialdehydstärke und oxidierte Stärkeabbauprodukte in Betracht, wie beispielsweise Gluconsäure, Glucarsäure und Glucuronsäure. Solche Verbindungen werden beispielsweise durch Oxidation von Stärke mit Perjodat, Chromsäure, Wasserstoffperoxid, Stickstoffdioxid, Stickstofftetroxid, Salpetersäure oder Hypochlorit erhalten.

Als Komponente (B) eignen sich außerdem chemisch modifizierte Polysaccharide, insbesondere chemisch modifizierte Stärken, z.B. mit Säuren zu Estern und mit Alkoholen zu Ethern umgesetzte Stärken und Stärkeabbauprodukte. Die Veresterung dieser Stoffe ist sowohl mit anorganischen als auch mit organischen Säuren, deren Anhydriden oder Chloriden möglich. Bei direkter Veresterung führt das freigesetzte Wasser zu einer säurekatalysierten Spaltung glykosidischer Bindungen. Von besonderem technischen Interesse sind phosphatierte und acetylierte Stärken und Stärkeabbauprodukte. Die gängigste Methode zur Veretherung von Stärke ist die Behandlung der Stärke und der Stärkeabbauprodukte mit organischen Halogenverbindungen, Epoxiden oder Sulfaten in wäßriger alkalischer Lösung. Stärkeether sind beispielsweise die Alkylether, Hydroxyalkylether, Carboxyalkylether und Allylether von Stärke. Unter chemisch modifizierten Stärken gemäß Komponente (B) sollen auch kationisch modifizierte Stärken verstanden werden, z.B. mit 2,3-Epoxipropyltrimethylammoniumchlorid umgesetzte Stärken wie sie z.B. in der US-PS 3 649 616 beschrieben sind.

Zu chemisch modifizierten Polysacchariden gehören beispielsweise auch Carboxymethylcellulose, Hydroxyethylcellulose, Hydroxypropylcellulose, Carboxymethylhydroxyethylcellulose, Sulfoethylcellulose, Carboxymethylsulfoethylcellulose, Hydroxypropylsulfoethylcellulose, Hydroxyethylsulfoethylcellulose, Methylsulfoethylcellulose und Ethylsulfoethylcellulose.

Als Komponente (B) eignen sich vor allem chemisch modifizierte abgebaute Stärken, beispielsweise Hydrierungsprodukte von Stärkehydrolysaten, wie Sorbit und Mannit, Maltit und insbesondere hydrierte Glukosesirupe, weil man damit farblose Pfropfcopolymerisate herstellen kann, die sich selbst bei längerer Lagerung nicht verfärben. Auch oxidierte hydrolytisch abgebaute oder oxidierte enzymatisch abgebaute Stärken sind als Komponente (B) geeignet.

Ebenfalls geeignet sind die Produkte der sauer katalysierten oder enzymatischen Umglykosidierung oder Glykosidierung, wie z.B. Methylglukosid.

Zur Herstellung der Pfropfcopolymerisate werden die Monomeren (a) und (b) und gegebenenfalls (c) und (d) in Gegenwart von Verbindungen der Komponente (B) radikalisch polymerisiert. In einigen Fällen kann es für die Wirkung des entstehenden Pfropfpolymerisates günstig sein, zwei oder mehrere der unter (B) angegebenen Verbindungen einzusetzen, z.B. Mischungen aus hydrolytisch oder enzymatisch abgebauten Stärken und Gluconsäure, Mischungen aus einem Monosaccharid und einem Oligosaccharid, Mischungen aus einer enzymatisch abgebauten Stärke und einem Monosaccharid oder Mischungen aus Glukose und Saccharose oder Mannose. Die Polymerisation kann in Gegenwart oder auch in Abwesenheit von inerten Lösemitteln oder inerten Verdünnungsmitteln durchgeführt werden. Da die Polymerisation in Abwesenheit von inerten Löse- oder Verdünnungsmitteln meistens zu uneinheitlichen Pfropfcopolymerisaten führt, ist die Pfropfcopolymerisation in einem inerten Löse- oder Verdünnungsmittel bevorzugt. Geeignet sind beispielsweise solche inerten Verdünnungsmittel, in denen die unter (B) angegebenen Verbindungen suspendiert werden können und die die Monomeren (A) lösen. In diesen Fällen liegen die Pfropfcopolymerisate nach der Copolymerisation in suspendierter Form vor und können leicht durch Filtration in fester Form isoliert werden. Geeignete inerte Verdünnungsmittel sind beispielsweise Toluol, Xylol, o-, m-, p-Xylol und Isomerengemische, Ethylbenzol, aliphatische Kohlenwasserstoffe, wie Pentan, Hexan, Heptan, Octan, Nonan, Dodecan, Cyclohexan, Cyclooctan, Methylcyclohexan sowie Mischungen der genannten Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan. Bei der oben beschriebenen Arbeitsweise, bei der die Verbindungen der Komponente (B) in einem inerten Verdünnungsmittel suspendiert sind, setzt man vorzugsweise wasserfreie Verbindungen der Komponente (B) ein und verwendet aus der Gruppe der Monomeren (a) vorzugsweise die Anhydride. Eine bevorzugte Art der Herstellung der Pfropfcopolymerisate ist die Lösungspolymerisation, wobei die Verbindungen der Komponente (B), die Monomeren (A) und das gebildete Pfropfcopolymerisat zumindest dispergiert, vorzugsweise in gelöster Form vorliegen. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, sowie Mischungen der genannten inerten Lösemittel. Die Copolymerisation kann kontinuierlich oder diskontinuierlich durchgeführt werden. Die Komponenten (A) und (B) können, wie bereits oben erwähnt, auch in Abwesenheit von inerten Verdünnungs- oder Lösemitteln copolymerisiert werden. Hierfür bietet sich insbesondere die kontinuierliche Polymerisation bei Temperaturen von 160 bis 250°C an. Gegebenenfalls ist es hierbei möglich, in Abwesenheit von Polymerisationsinitiatoren zu arbeiten. Vorzugsweise setzt man jedoch auch hierbei solche Katalysatoren ein, die unter den Polymerisationsbedingungen Radikale bilden, z.B. anorganische und organische Peroxide, Persulfate, Azoverbindungen und sogenannte Redoxkatalysatoren.

Die Pfropfcopolymerisate werden im allgemeinen unter Mitverwendung von radikalbildenden Initiatoren hergestellt.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

Temperatur: 40 bis 60°C:

Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis-(2-methyl-N-phenylpropionamidin)dihydrochlorid, 2,2'-Azobis-(2-methylpropionamidin)dihydrochlorid.

Temperatur: 60 bis 80°C:

tert.-Butylperpivalat, Dioctanoylperoxid, Dilauroylperoxid, 2,2'-Azobis-(2,4-dimethylvaleronitril).

Temperatur: 80 bis 100°C:

Dibenzoylperoxid, tert.-Butylper-2-ethylhexanoat, tert.-Butylpermaleinat, 2,2'-Azobis-(isobutylronitril), Dimethyl-2,2'-azobisisobutyrat, Natriumpersulfat, Kaliumpersulfat, Ammoniumpersulfat.

Temperatur: 100 bis 120°C:

Bis-(tert.-butylperoxid)-cyclohexan, tert.Butylperoxiisopropylcarbonat, tert.-Butylperacetat, Wasserstoffperoxid.

Temperatur: 120 bis 140°C:

2,2-Bis-(tert.-butylperoxi)-butan, Dicumylperoxid, Di-tert.-amylperoxid, Di-tert.-butylperoxid.

Temperatur: >140°C

p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Copolymerisation der wesentlichen Monomeren (a) und (b) und der gegebenenfalls mitzuverwendenden Monomeren (c) und/oder (d) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, $\alpha$-Methylbenzoin oder $\alpha$-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Pfropfcopolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich auperdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Um farblose oder nur wenig gefärbte Pfropfcopolymerisate aus den Komponenten (A) und (B) herzustellen, wird die Copolymerisation in Gegenwart von wasserlöslichen Phosphorverbindungen durchgeführt, in denen der Phosphor eine Oxidationszahl von 1 bis 4 hat, deren wasserlöslichen Alkali- oder Ammoniumsalzen, wasserlöslichen-PO $(OH)_2$-Gruppen enthaltenden Verbindungen und/oder deren wasserlöslichen Salzen. Vorzugsweise verwendet man phosphorige Säure. Die in Betracht kommenden Phosphorverbindungen werden zur Verringerung der Verfärbung der Pfropfcopolymerisate in Mengen von 0,01 bis 5 Gew.-%, bezogen auf die eingesetzten Monomeren (A) angewendet. Die in Betracht kommenden Phosphorverbindungen sind in der EP-A-0 175 317 beschrieben.

Die Copolymerisation der Komponenten (A) und (B) erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich copolymerisieren, indem man das Reaktionsgemisch auf die Polymerisationstemperatur erhitzt. Diese Temperaturen liegen in dem Bereich von 40 bis 150°C. Bei dieser Methode erhält man jedoch Pfropfcopolymerisate, die einen relativ hohen Gehalt an nichtpolymerisierter Dicarbonsäure aufweisen. Um den Verlauf der Polymerisationsreaktion besser kontrollieren zu können, gibt man daher die Monomeren (A) nach dem Anspringen der Copolymerisation dem polymerisierenden Gemisch kontinuierlich oder absatzweise in dem Mape zu, daß die Pfropfcopolymerisation in dem gewünschten Temperaturbereich gut kontrollierbar ist. Bevorzugt ist eine Art der Zugabe der Monomeren der Komponente (A) bei der man im Polymerisationsreaktor zunächst die Verbindungen der Komponente (B) oder zumindest einen Teil der Verbindungen der Komponente (B) zusammen mit mindestens einem Monomer (a) im Reaktor vorlegt und darin unter Rühren auf die gewünschte Polymerisationstemperatur erhitzt. Sobald diese Temperatur erreicht ist, fügt man dazu über einen Zeitraum von etwa 1 bis 10, vorzugsweise 2 bis 8 Stunden, die Monomeren (b) und gegebenenfalls (c) und/oder (d) sowie den Initiator und gegebenenfalls einen Regler zu. Eine derartige Vorgehensweise wird beispielsweise beim Polymerisieren der Komponenten (A) und (B) in einem inerten Verdünnungsmittel, in dem die Komponente (B) suspendiert ist sowie auch bei der in Lösung durchgeführten Pfropfcopolymerisation angewendet.

Die Pfropfcopolymerisate werden vorzugsweise durch Suspensions- oder Lösungspolymerisation der Komponenten (A) und (B) in wäßrigem Medium hergestellt, wobei die Lösungspolymerisation in Wasser besonders bevorzugt ist. Bei der Lösungspolymerisation in wäßrigem Medium geht man beispielsweise so vor, daß man die Monomeren (a) und mindestens einen Teil der Verbindungen der Komponente (B) in wäßrigem Medium vorlegt und die Monomeren (b) sowie gegebenenfalls die Monomeren (c) und/oder (d) kontinuierlich oder absatzweise dem polymerisierenden Reaktionsgemisch zufügt und in der Weise copolymerisiert, daß der Neutralisationsgrad der einpolymerisierten Monomer-Einheiten (a) und (b) nach Abschluß der Pfropfcopolymerisation, d.h. wenn mindestens 95, vorzugsweise 98-99% der Monomeren polymerisiert sind, 20 bis 80 % beträgt. Vorzugsweise werden die Monomeren (a) am Beginn der Polymerisation bereits in mindestens zu 20% neutralisierter Form eingesetzt. Bei der Pfropfcopolymerisation in wäßrigem Medium kann man die gesamte Menge der Verbindungen der Komponente (B) oder nur einen Teil, z.B. 50 % der Verbindungen der Komponente (B) zusammen mit den Monomeren (a) vorlegen und die restlichen Mengen an Verbindungen der Komponente (B) dem polymerisierenden Reaktionsgemisch zusammen mit den Monomeren (b) sowie gegebenenfalls den Monomeren (c) und/oder (d) kontinuierlich oder absatzweise zufügen. Um Pfropfcopolymerisate mit geringem Restgehalt an nichtpolymerisiertem Monomeren (a), d.h. insbesondere Maleinsäure, zu erhalten, ist es wichtig, daß man den Neutralisationsgrad der Monomeren während der Copolymerisation kontrolliert. Er soll während der Pfropfcopolymerisation 20 bis 80, vorzugsweise 30 bis 70 %, betragen. Man kann hierzu beispielsweise die Monomeren (a) und (b) partiell neutralisieren, so daß ihr Neutralisationsgrad jeweils in dem angegebenen Bereich liegt. Es ist aber auch möglich, die im Reaktor vorgelegten Monomeren der Gruppe (a) vollständig oder zu ca. 90% zu neutralisieren und die Monomeren der Gruppe (b) in nicht-neutralisierter Form zuzugeben, so daß sich der Gesamtneutralisationsgrad der Monomeren (a) und (b) und gegebenenfalls (c), d.h. wenn man als (c) ein Säuregruppen enthaltendes Monomer einsetzt, z.B. Acrylamidopropansulfonsäure oder Vinylphosphonsäure, während der Polymerisation von zunächst ca. 100 % oder ca. 90% auf Werte in dem Bereich von 20 bis 80 % erniedrigt. Um einen bestimmten Neutralisationsgrad innerhalb dieses Bereiches der Monomeren (a) und (b) aufrecht zu erhalten, kann man während der Copolymerisation eine Base, z.B. Natronlauge, Kalilauge, Ammoniak oder Ethanolamin, zufügen. In Abhängigkeit von der Zusammensetzung der Pfropfcopolymerisate wird die Hauptmenge, d.h. 60 bis 80 % der Monomeren (a) und (b) bei einem Neutralisationsgrad von 20 bis 80 % polymerisiert. Besonders bevorzugt wird die Lösungscopolymerisation mit Wasserstoffperoxid, Natriumpersulfat oder Mischungen in jedem beliebigen Verhältnis als Initiator durchgeführt. Hierfür benötigt man, bezogen auf die Monomeren (A) 0,5 bis 20 Gew.% an Initiator. Bestehen die Monomergemische (A) aus einem geringen Anteil der Monomeren der Gruppe (a), wird eine relativ niedrige Initiatormenge und bei einem hohen Anteil der Monomeren (a) eine größere Initiatormenge eingesetzt, z.B. bei 90 Gew.-% Monomer (a) etwa 15 bis 18 Gew.-% Initiator. Auch hierbei geht man so vor, daß man mindestens einen Teil der Komponente (B) zusammen mit den Monomeren (a), die vorzugsweise zu ca. mindestens 90 % neutralisiert sind, vorlegt und die Monomeren (b) sowie gegebenenfalls die Monomeren (c) und/oder (d) unter Einhaltung des geforderten Neutralisationsgrades von 20 bis 80 % zugibt. Der Neutralisationsgrad der Monomeren (b) kann entweder durch separate Zugabe entsprechender Mengen an Base oder durch Zugabe von partiell neutralisierten Monomeren (b) zum Reaktionsgemisch erfolgen. Der Neutralisationsgrad der partiell neutralisierten Monomeren (b) liegt dann in dem Bereich von 20 bis 80 %.

Wie bereits erwähnt, können Polysaccharide in wäßriger Suspension der Pfropfcopolymerisation unterworfen werden. Vorzugsweise stellt man jedoch Propfcopolymerisate aus Polysacchariden dadurch her, daß man ein wasserunlösliches Polysaccharid zunächst in wäßriger Suspension unter Zusatz von Enzymen und/oder Säuren oder durch thermische und/oder mechanische Behandlung in eine wasserlösliche oder in Wasser dispergierbare Form überführt und die dabei erhältliche wäßrige Lösung des abgebauten Polysaccharids der Pfropfcopolymerisation unterwirft. Hierbei wird zunächst ein wasserunlösliches Polysaccharid, wie beispielsweise Kartoffelstärke, in Wasser suspendiert und abgebaut. Dieser Abbau kann unter der Einwirkung von Enzymen, z.B. $\alpha$- oder $\beta$-Amylase oder von entzweigenden Enyzmen, wie z.B. Pullulanase, oder durch Einwirkung von anorganischen oder organischen Säuren in bekannter Weise vorgenommen werden. Als anorganische Säuren eignen sich beispielsweise Phosphorsäure, Schwefelsäure, Salzsäure und Salpetersäure. Geeignete organische Säuren sind beispielsweise gesättigte oder ungesättigte Carbonsäuren, z.B. Ameisensäure, Essigsäure, Propionsäure, Acrylsäure, Methacrylsäure, Maleinsäure, Itaconsäure, p-Toluolsulfonsäure und Benzolsulfonsäure. Das überführen der Polysaccharide in eine wasserlösliche Form wird vorzugsweise mit einem Monomer (a) vorgenommen, das anschließend bei der Propfcopolymerisation eingesetzt wird. So kann man beispielsweise in einfacher Weise Kartoffelstärke oder Maisstärke in wäßriger Suspension durch Zugabe von Maleinsäure oder Itaconsäure in dem Temperaturbereich von 50 bis 150°C hydrolytisch abbauen. Sobald die Stärke den gewünschten Abbaugrad erreicht hat, wird die zugesetzte Maleinsäure oder Itaconsäure zu mindestens 20, vorzugsweise 90 %, neutralisiert und durch Zugabe der Monomeren (b) und gegebenenfalls (c) und/oder (d) die Pfropfcopolymerisation durchgeführt.

Der enzymatische Abbau von Stärke wird in dem Temperaturbereich von 30 bis 120°C durchgeführt, während man

den hydrolytischen Abbau der Stärke bei Temperaturen von 50 bis 150°C vornimmt. Für den hydrolytischen Abbau benötigt man etwa 5 Minuten bis 10 Stunden, wobei der Grad des hydrolytischen Abbaus der Stärke von der gewählten Temperatur, dem pH-Wert und der Zeit abhängt. Nähere Angaben über den Abbau von Stärke können der Fachliteratur entnommen werden, vgl. z.B. Günther Tegge, Stärke und Stärkederivate, Behr's Verlag, Hamburg 1984. In einigen Fällen hat es sich als vorteilhaft erwiesen, bereits bei dem enzymatischen oder hydrolytischen Abbau der Stärke mindestens eine der Phosphorverbindungen einzusetzen, die gemäß der Lehre der EP-A-0 175 317 zu Polymerisaten führen, die nicht oder nur sehr wenig gefärbt sind.

Bei der Pfropfcopolymerisation liegen die Temperaturen üblicherweise in dem Bereich von 40 bis 180, vorzugsweise 60 bis 150°C und insbesondere bei 70 bis 110°C. Sobald die Temperatur bei der Copolymerisation oberhalb der Siedepunkte des inerten Verdünnungs-oder Lösemittels oder der Monomeren liegt, wird die Copolymerisation unter Druck durchgeführt. Die Konzentration der Komponenten (A) und (B) beträgt bei der Copolymerisation in Gegenwart von inerten Löse- oder inerten Verdünnungsmitteln 10 bis 80, vorzugsweise 20 bis 70 Gew.%. Die Herstellung der Pfropfcopolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind. Insbesondere bei der Pfropfcopolymerisation in Abwesenheit von Verdünnungsmitteln kann es vorteilhaft sein, die Pfropfcopolymerisation in Knetern durchzuführen. Ebenso kann es notwendig sein, in einem Kneter zu polymerisieren, wenn man bei hohen Konzentrationen arbeitet oder wenn die Naturstoffe hochmolekular sind und zunächst stark quellen.

Man erhält Pfropfcopolymerisate, die, soweit sie in Wasser löslich sind, K-Werte von 8 bis 250, vorzugsweise 10 bis 150, haben (gemessen an 1 %igen wäßrigen Lösungen der Copolymerisate bei pH 7 und 25°C). Die nach den oben angegebenen Verfahren herstellbaren Pfropfcopolymerisate sind farblose bis bräunlich gefärbte Produkte. Sie liegen beim Polymerisieren in wäßrigem Medium als Dispersionen oder Polymerlösungen vor. In Abhängigkeit von der jeweiligen Zusammensetzung der Propfcopolymerisate handelt es sich dabei um niedrigviskose bis pastöse wäßrige Lösungen oder wäßrige Dispersionen.

Die hochmolekularen Pfropfcopolymerisate, d.h. solche mit K-Werten von 120 bis 250, werden vorzugsweise als Verdickungsmittel für wäßrige Systeme verwendet. Anwendungen dieser Art sind beispielsweise Zusätze der Pfropfcopolymerisate zu Papierstreichmassen, um die Viskosität und Wasserretention der Papierstreichmasse zu erhöhen, Zusatz zu wäßrigen Anstrichdisper sionen und Zusatz als Verdickungsmittel in Pigmentdruckpasten. Pfropfcopolymerisate mit einem K-Wert 8 bis 90, vorzugsweise 20 bis 75, werden mi besonderem Vorteil als Zusatz zu Wasch- und Reinigungsmitteln für Textilien und harte Oberflächen in Mengen von 0,1 bis 20, vorzugsweise 0,5 bis 12 Gew.%, bezogen auf die Waschmittelformulierung oder Reinigungsmittelformulierung eingesetzt. Pfropfcopolymerisate dieses K-Wertbereiches besitzen eine hervorragende inkrustationsinhibierende Wirkung in phosphatfreien und phosphatarmen (d.h. Phosphatgehalte unterhalb von 25 Gew.%) Waschmitteln. Pfropfcopolymerisate mit K-Werten von 8 bis ca. 35 sind ebenfalls als Zusatz zu Waschmitteln verwendbar, wie diejenigen Pfropfcopolymerisate mit K-Werten von mindestens 75. Die niedrigmolekularen Pfropfcopolymerisate bewirken in Waschmitteln beim Waschen zusätzlich eine Dispergierung des Partikelschmutzes und verhindern eine Wiederanschmutzung des zu waschenden Textilgutes. Außerdem zeigen sie oftmals eine viskositätssgenkende Wirkung bei Waschmittel-Slurries. Daher ist es oft von Vorteil, eine Mischung aus Pfropfcopolymeren mit höherem K-Wert und niedrigem K-Wert als Waschmitteladditiv einzusetzen. Die hochmolekularen Pfropfcopolymerisate wirken in Waschmittelformulierungen als Verdickungsmittel.

Die Pfropfcopolymeren mit K-Werten von 8 bis 90 eignen sich hervorragend als Additive für Geschirrspülmittel. Bei Zusätzen von 0,1 bis 20, vorzugsweise 0,5 bis 12 Gew.-% verhindern sie Beläge auf Geschirr, Bestecken und Glaswaren.

Die oben beschriebenen Pfropfcopolymerisate sind aufgrund des Naturstoffanteils im Copolymerisat gegenüber den bisher verwendeten Copolymerisaten auf Basis ethylenisch ungesättigter Monomerer biologisch abbaubar, mindestens jedoch aus dem Abwasser von Kläranlagen mit dem Klärschlamm eliminierbar. Besonders bemerkenswert ist die Tatsache, daß Pfropfcopolymerisate mit einem Naturstoffanteil von etwa 40 Gew.% eines Polysaccharids, eines abgebauten Polysaccharids, eines Oligo- oder Monosaccharids in Textilwaschmitteln in der inkrustationsinhibierenden Wirkung zumindest vergleichbar oder zum Teil sogar besser sind als die aus der EP-PS 0 025 551 bekannten als Inkrustationsinhibitor in Textilwaschmitteln hochwirksamen Copolymerisate aus den Monomeren (a) und (b). Im Gegensatz zu den beschriebenen Pfropfcopolymerisaten sind beispielsweise Mischungen aus abgebauter Stärke, einem Oligo- oder Monosaccharid und den Copolymerisaten aus den Monomeren (a) und (b) bei einem Gehalt an Naturstoffen von ca. 40 % beim Zusatz in Textilwaschmitteln deutlich weniger als Inkrustationsinhibitor wirksam. Gleiches gilt für die aus dem eingangs erwähnten Stand der Technik bekannten Pfropfpolymerisate von Acrylsäure auf Polysaccharide oder deren Abbauprodukte.

Die erfindungsgemäßen Pfropfcopolymerisate sind sowohl in flüssigen als auch in pulverförmigen Wasch- und Reinigungsmitteln einsetzbar. Sie weisen gegenüber den aus der EP-PS 0 025 551 bekannten Copolymerisaten aus den Monomeren der Gruppen (a) und (b) vor allem eine verbesserte Verträglichkeit in flüssigen Waschmittelformulierungen auf.

Die Zusammensetzung von Waschmittelformulierungen können sehr unterschiedlich sein. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt.

Die oben beschriebenen Pfropfcopolymerisate werden erfindungsgemäß in Waschmitteln eingesetzt, die bis zu 45 Gew.-% Phosphat enthalten, wobei die Verwendung der Pfropfcopolymerisate in Waschmitteln mit reduziertem Phosphatgehalt (darunter soll ein Phosphatgehalt von weniger als 25 Gew.% Natriumtriphosphat verstanden werden) oder in phosphatfreien Waschmitteln sowie in Reinigungsmitteln bevorzugt ist. Die Copolymerisate können dabei in Form eines Granulats, einer Paste, einer hochviskosen Masse, als Dispersion oder als Lösung in einem Lösemittel der Waschmittelformulierung zugegeben werden. Die Pfropfcopolymerisate können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden.

Waschmittelformulierungen und Reinigungsmittelformulierungen sind pulverförmig oder flüssig. Sie können regional und gemäß dem speziellen Anwendungszweck verschieden zusammengesetzt sein.

Universalhaushaltswaschmittel für Trommelwaschmaschinen, wie sie in Europa weit verbreitet sind, enthalten gewöhnlich 5 bis 10 Gew.% Aniontenside; 1 bis 5 Gew.% nichtionische Tenside; 1 bis 5 Gew.% Schaumregulatoren, wie Silikonöle oder Seifen; 0 bis 40 Gew.% Enthärtungsmittel, wie Soda oder Pentanatriumtriphosphat, das durch die erfindungsgemäßen Verbindungen teilweise oder ganz ersetzt werden kann; 0 bis 30 Gew.% Ionenaustauscher, wie Zeolith A; 2 bis 7 Gew.% Natriumsilikate als Korrosionsinhibitoren; 10 bis 30 Gew.% Bleichmittel, wie Natriumperborat, Natriumpercarbonat organische Persäuren oder deren Salze; 0 bis 5 Gew.% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.%) und zumeist fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel, Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamine, $\alpha$-Sulfofettsäureester, Fettsäuremonoglyceride oder Umsetzungsprodukte von 1 bis 4 Mol Ethylenoxid mit primären oder sekundären Fettalkoholen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Die obengenannten Anlagerungsprodukte des Ethylenoxids können gegebenenfalls zusätzlich bis zu 90 Gew.-%, bezogen auf einkondensiertes Ethylenoxid und Propylenoxid, Propylenoxid einkondensiert enthalten. Die Anlagerungsprodukte, die Ethylenoxid und Propylenoxid einkondensiert enthalten, können gegebenenfalls durch Einkondensieren von Butylenoxid in Mengen bis zu 60 Gew.-%, bezogen auf den Gesamtgehalt an Alkylenoxid, modifiziert sein. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie

zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylether und deren Alkalisalze sein. Diese Stoffe können z.B. mit Hilfe der Formel $RO(CH_2CH_2O)_n$-$C_4H_8$-$SO_3Na$, in der n = 5 bis 40 und R = Oleyl ist, charakterisiert werden.

Die oben beschriebenen Pfropfcopolymerisate können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Pfropfcopolymerisate mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittel, z.B. Isopropanol, Methanol, Ethanol, Glykol, Diethylenglykol oder Triethylenglykol oder entsprechende Propylenglykole, homogene Mischungen herstellen. Die Tensidmenge in Flüssigwaschmitteln beträgt 4 bis 50 Gew.%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure, Ethylendiamintetraethylenphosphonsäure und deren Salze. Die Komplexbildner werden in Mengen von 0 bis 10 Gew.%, bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifzierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis zu 45, vorzugsweise bis zu 25 Gew.%.

Die erfindungsgemäßen Pfropfcopolymerisate können auch mit anderen bekannten Waschmitteladditiven (wie z.B. Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Vergrauungsinhibierung, sondern auch die Wirkung des anderen Waschmitteladditivs verstärkt werden kann.

Um die Eigenschaften der erfindungsgemäßen Pfropfcopolymerisate für den Einsatz in Waschmitteln zu verbessern, kann es in manchen Fällen vorteilhaft sein, die Pfropfcopolymerisate nachträglich einer oxidativen Behandlung zu unterziehen. Zu diesem Zweck läßt man Oxidationsmittel entweder auf die pulverförmigen Pfropfcopolymerisate direkt einwirken oder auf Suspensionen von Pfropfcopolymerisaten in einem inerten Suspensionsmittel oder auch auf Lösungen von Pfropfcopolymerisaten in einem inerten Lösemittel, z.B. in einem einwertigen Alkohol wie Methanol, Ethanol, n-Propanol oder Isopropanol oder vorzugsweise in Wasser oder in Mischungen aus Wasser und Alkoholen. Die Oxidation wird vorzugsweise in wäßrigen Lösungen der Pfropfcopolymerisate durchgeführt.

Als Oxidationsmittel kommen solche in Frage, die beim Erhitzen allein oder in Gegenwart von Katalysatoren Sauerstoff freisetzen. Geeignete organische Verbindungen sind allgemein Peroxide, die sehr leicht aktiven Sauerstoff abspalten. Bei niedrigen Temperaturen haben nur Hydroperoxide und Persäuren eine deutliche oxidierende Wirkung, Perester, Diacylperoxide und Dialkylperoxide wirken erst bei höheren Temperaturen.

Geeignete Peroxide sind beispielsweise Diacetylperoxid, Isopropylpercarbonat, tert.-Butylhydroperoxid, Cumolhydroperoxid, Acetylacetonperoxid, Methylethylketonperoxid, Ditertiärbutylperoxid, Dicumylperoxid, tert.-Butylperpivalat, tert.-Butylperoctanoat, tert.-Butylperethylhexanoat. Bevorzugt sind die preisgünstigen anorganischen Oxidationsmittel,

die sich besonders gut für die Oxidation von wäßrigen Lösungen der carbonylgruppenhaltigen Polymeren eignen. Beispielsweise seien genannt Chlor, Brom, Jod, Salpetersäure, Natriumpermanganat, Kaliumchlorat, Natriumhypochlorit, Natriumperborat, Natriumpercarbonat und Natriumpersulfat. Ein besonders bevorzugtes Oxidationsmittel ist Wasserstoffperoxid. Der Zerfall der Perverbindungen, also die Oxidation, kann durch den Zusatz von Beschleunigern oder Aktivatoren forciert werden. Diese Beschleuniger oder Aktivatoren sind reduzierend wirkende, aber leicht Elektronen abgebende Stoffe wie beispielsweise tert.-Amine, Sulfinsäuren, Dithionite, Sulfite, α- und β-Ketocarbonsäuren, Glukosederivate sowie Schwermetalle, vorzugsweise in Form löslicher Salze anorganischer oder organischer Säuren oder Komplexe. Namentlich seien genannt Dimethylanilin, Dimethyl-p-toluidin, Diethylanilin, Natriumdithionit, Natriumsulfit, Ascorbinsäure, Glukose, Pentaacetylglukose, Ferroammonsulfat, Kupferchlorid, die Acetylacetonate von Eisen, Kupfer, Kobalt, Chrom, Mangan, Nickel und Vanadium.

Die Oxidationsmittel werden, berechnet auf die Pfropfcopolymeren, in Mengen von 1 bis 50 Gew.%, vorzugsweise 5 bis 30 Gew.%, zugesetzt. Die Reduktionsmittel werden, berechnet auf die Oxidationsmittel, in Mengen von 2 bis 50 Gew.% angewendet.

Die Schwermetallverbindungen setzt man, berechnet als Schwermetall und bezogen auf die Polymeren, in Mengen von 0,1 bis 100 ppm, vorzugsweise 0,5 bis 10 ppm ein. Oftmals ist es von Vorteil zur Beschleunigung der Reaktion, besonders wenn bei niedrigen Temperaturen gearbeitet wird, den Perverbindungen sowohl Reduktionsmittel als auch Schwermetallverbindungen zuzusetzen. Die Reaktionstemperaturen können sich zwischen 20 und 150°C, bevorzugt 50 bis 120°C, bewegen. Manchmal ist es auch vorteilhaft, die Oxidation durch Bestrahlen mit UV-Licht zu beschleunigen, oder auch bei niedrigen Temperaturen und kurzer Zeit zu oxidieren, besonders dann, wenn nur eine Oxidation der im Pfropfcopolymer enthaltenden -S-Gruppen erfolgen soll, ohne daß der K-Wert des Pfropfcopolymerisats merklich erniedrigt wird. Auch Luft und Sauerstoff kann allein oder in Kombination mit Oxidationsmitteln zur Oxidation der Pfropfcopolymerisate Verwendung finden.

Bei der Behandlung der Pfropfcopolymerisate mit Oxidationsmitteln werden Pfropfcopolymerisate mit einem relativ hohen K-Wert, z.B. in dem Bereich von 160 bis 200, relativ stark abgebaut, z.B. erhält man bei der oxidativen Behandlung dieser Pfropfcopolymerisate oxidierte Pfropfcopolymerisate, die K-Werte in dem Bereich von 15 bis 60 haben. Dagegen werden relativ niedrigmolekulare Pfropfcopolymerisate, z.B. Pfropfcopolymerisate mit K-Werten von 20 bis 70 relativ geringfügig abgebaut. Der K-Wert der relativ niedrigmolekularen oxidativ behandelten Pfropfcopolymerisate ist nur geringfügig niedriger oder entspricht in einigen Fällen sogar den K-Werten der unbehandelten Pfropfcopolymerisate. Die oxidativ behandelten Pfropfcopolymerisate weisen gegenüber den unbehandelten Pfropfcopolymerisaten ein verbessertes Calciumdispergiervermögen auf und besitzen außerdem eine erhöhte Stabilität in Oxidationsmitteln enthaltenden Wasch- und Reinigungsmitteln.

Die K-Werte der Polymerisate wurden nach H. Fikentscher, Cellulose-Chemie, Band 13, 58 bis 64 und 71 bis 74 (1932), bestimmt. Dabei bedeutet $K = k \times 10^3$. Die Messungen wurden an 1 %igen wäßrigen Lösungen der Natriumsalze der Pfropfcopolymerisate bei 25°C und einem pH-Wert von 7 durchgeführt. Falls nichts anderes bezeichnet, bedeuten die Angaben in Prozent Gewichtsprozent.

Die DE-Werte der Stärken oder ihrer Derivate bedeuten Dextrose-Äquivalente. Sie wurden nach der Methode von Luff-Schoorl bestimmt, vgl. G. Tegge, Stärke und Stärkederivate, Behr's Verlag, Hamburg 1984, Seite 305.

Beispiele: Herstellung der Pfropfcopolymerisate

Beispiel 1

In einem beheizbaren Reaktor, der mit Rührer, Rückflußkühler, Thermometer, Zulaufvorrichtungen, Stickstoffeinlaß- und -auslaßvorrichtungen versehen ist, werden 263,1 g Wasser, 80 g Dextrin weiß (90 % löslicher Anteil), 63,8 g Maleinsäureanhydrid und 3,5 g einer 0,1 %igen wäßrigen Eisen-II-Ammoniumsulfatlösung und 94 g 50 %iger wäßriger Natronlauge bis zum Sieden erhitzt. Der Neutralisationsgrad der aus dem Maleinsäureanhydrid in wäßriger Lösung entstehenden Maleinsäure beträgt 90,2 %. Nach Beginn des Siedens der Reaktionsmischung gibt man innerhalb von 5 Stunden eine Lösung aus 178,2 g Acrylsäure in 141,9 g Wasser und innerhalb von 6 Stunden eine Lösung von 16,6 g 50 %igem Wasserstoffperoxid in 44,4 g Wasser gleichmäßig unter Sieden zu. Nach Beendigung der Acrylsäurezugabe beträgt der Neutralisationsgrad der im Polymerisat enthaltenen Maleinsäure- und Acrylsäure-Einheiten 31,1 %. Das Reaktionsgemisch wird nach Abschluß der Wasserstoffperoxiddosierung noch 1 Stunde zum Sieden erhitzt, danach durch Zugabe von 180 g einer 50 %igen wäßrigen Natronlauge bis zu einem pH-Wert von 7,2 neutralisiert und abgekühlt. Man erhält eine trübe, hochviskose weiße Lösung mit einem Feststoffgehalt von 39,3 %. Das Pfropfcopolymerisat hat einen K-Wert von 53 und einen Restgehalt an nichtpolymerisierter Maleinsäure von 0,73 %.

Beispiel 2

Beispiel 1 wird mit der Ausnahme wiederholt, daß man anstelle von Dextrin weiß dieselbe Menge Maltodextrin mit

einem DE-Wert (nach Luff-Schoorl) von 11 bis 14 einsetzt. Man erhält eine trübe, hochviskose gelbliche Lösung mit einem Feststoffgehalt von 39,6 %. Das Pfropfcopolymerisat hat einen K-Wert von 58,3 und enthält 0,3 % nichtpolymerisierte Maleinsäure.

Beispiel 3

In dem in Beispiel 1 angegebenen Reaktor werden 263,1 g Wasser, 160 g Dextrose, 47,9 g Maleinsäureanhydrid, 3,5 g einer 0,1%igen Eisen-II-Ammonsulfatlösung und 70,5 g 50 %ige wäßrige Natronlauge zum Sieden erhitzt. Der Neutralisationsgrad der aus dem Maleinsäureanhydrid entstehenden Maleinsäure beträgt 90,15 %. Unmittelbar nach Siedebeginn gibt man innerhalb von 5 Stunden eine Lösung von 133,6 g Acrylsäure in 141,9 g Wasser und innerhalb von 6 Stunden eine Lösung von 12,45 g 50 %igem Wasserstoffperoxid in 44,4 g Wasser gleichmäßig unter Sieden des Reaktionsgemisches zu. Der Neutralisationsgrad der einpolymerisierten Maleinsäure- und Acrylsäure-Einheiten im Pfropfcopolymerisat beträgt dann 31,1 %. Das Reaktionsgemisch wird noch 1 Stunde zum Sieden erhitzt, dann mit 123,7 g 50 %iger wäßriger Natronlauge bis zu einem pH-Wert von 7,0 neutralisiert und gekühlt. Man erhält eine klare, niedrigviskose, bräunliche Lösung mit einem Feststoffgehalt von 37,5 %. Das Pfropfcopolymerisat hat einen K-Wert von 26,4 und enthält 0,24 % nichtpolymerisierter Maleinsäure.

Beispiel 4

Beispiel 1 wird mit der einzigen Ausnahme wiederholt, daß man anstelle von Dextrin weiß dieselbe Menge Kartoffelstärke einsetzt. Man erhält eine trübe, hochviskose weiße Dispersion mit einem Feststoffgehalt von 39,4 %. Der Rest Monomergehalt des Pfropfcopolymerisats an Maleinsäure beträgt 1,8 %. Der K-Wert ist wegen der Unlöslichkeit des Pfropfcopolymerisats in Wasser nicht bestimmbar.

Beispiel 5

In dem in Beispiel 1 beschriebenen Reaktor werden 263,1 g Wasser, 120 g Dextrin weiß (90 % löslicher Anteil), 55,9 g Maleinsäureanhydrid, 3,5 g 0,1 %ige wäßrige Lösung von Eisen-II-Ammoniumsulfat und 82,2 g 50 %ige wäßrige Natronlauge vorgelegt und zum Sieden erhitzt. Der Neutralisationsgrad, der aus dem Maleinsäureanhydrid durch Hydrolyse entstehenden Maleinsäure beträgt 90 %. Unmittelbar nach dem Beginn des Siedens gibt man innerhalb von 5 Stunden eine Lösung von 155,9 g 97 %iger Acrylsäure in 141,9 g Wasser und getrennt davon innerhalb von 6 Stunden eine Lösung von 14,5 g 50 %igem Wasserstoffperoxid in 44,9 g Wasser gleichmäßig zu und erhitzt das Reaktionsgemisch unter Rühren zum Sieden. Der Neutralisationsgrad der im Copolymerisat einpolymerisiert enthaltenen Maleinsäure- und Acrylsäureeinheiten beträgt 31,7 %. Nach Beendigung der Wasserstoffperoxidzugabe wird das Reaktionsgemisch noch 1 Stunde zum Sieden erhitzt und danach durch Zugabe von 148 g 50 %iger Natronlauge bis zu einem pH-Wert von 7 neutralisiert. Die erhaltene trübe, viskose gelbliche Lösung hat einen Feststoffgehalt von 39,1 %. Der K-Wert des Pfropfcopolymerisats beträgt 35, der Restgehalt an monomerer Maleinsäure 0,03 %.

Beispiel 6

Dem in Beispiel 1 beschriebenen Reaktor werden 263,1 g Wasser, 160 g Maltodextrin mit einem DE-Wert von 11 bis 14, 47,9 g Maleinsäureanhydrid, 3,5 g einer 0,1 %igen wäßrigen Lösung von Eisen-II-Ammoniumsulfat und 70,5 g einer 50 %igen wäßrigen Natronlauge vorgelegt und zum Sieden erhitzt. Der Neutralisationsgrad der Maleinsäure beträgt 90,15 %. Unmittelbar nach Beginn des Siedens dosiert man innerhalb von 5 Stunden eine Lösung von 133,6 g 97 %iger Acrylsäure in 141,9 g Wasser und innerhalb von 6 Stunden eine Lösung von 12,45 g 50 %igem Wasserstoffperoxid in 44,4 g Wasser unter Aufrechterhalten des Siedens der Mischung gleichmäßig zu. Nach Abschluß der Wasserstoffperoxidzugabe wird das Reaktionsgemisch noch 1 Stunde zum Sieden erhitzt. Der Neutralisationsgrad der im Pfropfcopolymerisat enthaltenen Maleinsäure- und Acrylsäure-Einheiten beträgt 31,7 %.

Man fügt dann 123,7 g 50 %ige wäßrige Natronlauge bis zu einem pH-Wert von 7 zu. Man erhält eine klare, viskose bräunliche Lösung mit einem Feststoffgehalt von 39,7 %. Das Pfropfcopolymerisat hat einen K-Wert von 37,9 und enthält 0,09 % an nichtpolymerisierter Maleinsäure.

Beispiel 7

Beispiel 6 wird mit der Ausnahme wiederholt, daß man anstelle von Maltodextrin ein Dextrin vom Noredux-Typ (Noredux E 200 der Fa. Cerestar) einsetzt. Man erhält eine klare, schwachviskose bräunliche Lösung mit einem Feststoffgehalt von 39,8 %. Das Pfropfcopolymerisat hat einen Restgehalt an monomerer Maleinsäure von 0,07 % und weist einen K-Wert von 35,7 auf.

Beispiel 8

In dem in Beispiel 1 beschriebenen Reaktor werden 235,4 g Maltodextrin mit einem DE-Wert von 11 bis 14, 230 g Wasser, 117,54 g Maleinsäureanhydrid und 173 g 50 %ige wäßrige Natronlauge vorgelegt und zum Sieden erhitzt. Der Neutralisationsgrad der dabei entstehenden Maleinsäure beträgt 90,1 %. Unmittelbar nach Siedebeginn fügt man innerhalb von 5 Stunden eine Lösung aus 139,2 g 97 %iger Acrylsäure und 300 g Wasser und innerhalb von 6 Stunden separat davon jeweils Lösungen von 3,2 g Natriumpersulfat in 80 g Wasser und 10,14 g 30 %igem Wasserperoxid in 60 g Wasser gleichmäßig zu und polymerisiert beim Siedepunkt des Reaktionsgemisches. Die im Pfropfcopolymerisat enthaltenen Maleinsäure- und Acrylsäure-Einheiten weisen einen Neutralisationsgrad von 50,6 % auf. Nach Beendigung der Wasserstoffperoxidzugabe wird das Reaktionsgemisch noch 1 Stunde zum Sieden erhitzt und durch Zusatz von 137 g 50 %iger wäßriger Natronlauge neutralisiert. Man erhält eine klare, viskose, braune Lösung mit einem Feststoffgehalt von 39 %. Das Pfropfcopolymerisat hat einen K-Wert von 31,5 und enthält 1,2 % monomere Maleinsäure.

Beispiel 9

In dem in Beispiel 1 beschriebenen Reaktor werden 298 g Wasser, 136 g Dextrose, 52,7 g Maleinsäureanhydrid, 3,5 g einer 0,1 %igen wäßrigen Lösung von Eisen-II-Ammoniumsulfat und 77,5 g 50 %iger Natronlauge vorgelegt und zum Sieden erhitzt. Der Neutralisationsgrad der dabei aus dem Maleinsäureanhydrid durch Hydrolyse entstehenden Maleinsäure beträgt 90,1 %. Unmittelbar nach Siedebeginn gibt man innerhalb von 5 Stunden 142,6 g Acrylsäure in 141,9 g Wasser und separat davon innerhalb von 6 Stunden 13,7 g 50 %iges Wasserstoffperoxid in 44,4 g Wasser gleichmäßig zu und führt die Polymerisation beim Siedepunkt des Gemisches durch. Der Neutralisationsgrad der im Pfropfcopolymerisat enthaltenen Maleinsäure- und Acrylsäure-Einheiten beträgt 31,7 %. Das Reaktionsgemisch wird nach Beendigung der Wasserstoffperoxidzugabe noch 1 Stunde zum Sieden erhitzt und dann mit 136 g 50 %iger wäßriger Natronlauge auf einen pH-Wert von 7 eingestellt. Die so erhaltenen klare, leicht viskose braune Lösung besitzt einen Feststoffgehalt von 35 %. Das Pfropfcopolymerisat hat einen K-Wert von 27 und enthält 0,03 % restliche Maleinsäure.

Beispiel 10

In dem in Beispiel 1 beschriebenen Reaktor werden 400 g Wasser, 320 g Dextrose, 16 g Maleinsäureanhydrid, 3,5 g 0,1 %ige wäßrige Lösung von Eisen-II-Ammoniumsulfat und 23,5 g 50 %ige wäßrige Natronlauge vorgelegt und zum Sieden erhitzt. Der Neutralisationsgrad der dabei entstehenden Maleinsäure beträgt 90 %. Unmittelbar nach Siedebeginn dosiert man innerhalb von 5 Stunden 43,21 g Acrylsäure in 141,9 g Wasser und getrennt davon innerhalb von 6 Stunden eine Lösung von 4,15 g 50 %igem Wasserstoffperoxid in 44,4 g Wasser unter Sieden zu. Das Reaktionsgemisch wird anschließend noch 1 Stunde zum Sieden erhitzt. Der Neutralisationsgrad der im Copolymerisat enthaltenen Maleinsäure- und Acrylsäure-Einheiten beträgt 31,7 %. Nach Abschluß der Polymerisation gibt man 20 g 50 %ige wäßrige Natronlauge zu und erhält so eine klare, schwach viskose, braune Lösung mit einem Feststoffgehalt von 37,5 % und einem pH-Wert von 7. Das Pfropfcopolymerisat hat einen K-Wert von 14,4 und enthält 0,13 % restliche Maleinsäure.

Beispiel 11

In dem in Beispiel 1 angegebenen Reaktor werden 263,1 g Wasser, 194 g Kartoffelstärke (82,4 %ig), 23,95 g Maleinsäureanhydrid und 0,57 g phosphorige Säure vorgelegt, zum Sieden erhitzt und 1 Stunde unter Rückflußsieden gerührt. Dann fügt man zu der Vorlage 23,95 g Maleinsäureanhydrid und 70,5 g 50 %ige wäßrige Natronlauge zu, so daß in der Vorlage eine partiell neutralisierte Maleinsäure mit einem Neutralisationsgrad von 90,15 % vorliegt. Zu der siedenden Reaktionsmischung fügt man innerhalb von 5 Stunden eine Lösung von 133,6 g Acrylsäure und 141,9 g Wasser und innerhalb von 6 Stunden eine Lösung von 12,45 g 50 %igem Wasserstoffperoxid in 44,4 g Wasser gleichmäßig zu. Der Neutralisationsgrad der einpolymerisierten Maleinsäure- und Acrylsäure-Einheiten im Copolymerisat beträgt 31,7 %. Das Reaktionsgemisch wird nach Beendigung der Initiatorzugabe noch 1 Stunde zum Sieden erhitzt und danach mit 125 g 50 %iger waßriger Natronlauge bis zu einem pH-Wert von 7 neutralisiert. Die leicht trübe, schwach viskose, hellbraune Lösung besitzt einen Feststoffgehalt von 41 %. Das Pfropfcopoly merisat hat einen K-Wert von 24,8 und enthält weniger als 0,01 % an nichtpolymerisierter Maleinsäure.

Beispiel 12

In dem in Beispiel 1 beschriebenen Reaktor werden 384,1 g Wasser, 291 g Kartoffelstärke (82,4 %ig), 32 g Maleinsäureanhydrid und 0,75 g phosphorige Säure vorgelegt und 1 Stunde zum Sieden erhitzt. Dann fügt man 47 g 50 %iger wäßriger Natronlauge zu, so daß die sich aus dem Maleinsäureanhydrid bildende Maleinsäure zu 90 % neutralisiert ist. Direkt nach Zugabe der Natronlauge zu der siedenden Mischung wird, ebenfalls unter Siedebedingungen, innerhalb von 5 Stunden eine Lösung von 89,1 g Acrylsäure und 71 g Wasser und separat davon innerhalb von 6 Stunden eine Lösung von 4,98 g 50 %igem Wasserstoffperoxid in 22,2 g Wasser gleichmäßig zudosiert. Das Reaktionsgemisch wird anschließend noch 1 Stunde beim Siedepunkt gerührt. Der Neutralisationsgrad der im Pfropfcopolymerisat enthaltenen Maleinsäure- und Acrylsäure-Einheiten beträgt 31,1 %. Nach Abschluß der Polymerisation fügt man 108 g 50 %ige wäßriger Natronlauge bis zu einem pH-Wert von 7 zu. Man erhält eine trübe, viskose hellbraune Lösung mit einem Feststoffgehalt von 38,5 %. Das Pfropfcopolymerisat hat einen K-Wert von 24,1 und enthält 1,4 % nichtpolymerisierte Maleinsäure.

Beispiele 13 bis 22

In dem in Bespiel 1 beschriebenen Reaktor werden Wasser, Naturstoff, 47,9 g Maleinsäureanhydrid, 0,57 g phosphorige Säure und 2 g Natriumhydrogensulfit vorgelegt und im Stickstoffstrom 1 Stunde bei 80°C gerührt. Dann fügt man zur Vorlage langsam 70,5 g 50 %ige wäßrige Natronlauge zu. Der Neutralisationsgrad der Maleinsäure beträgt dann 90,15 %. Anschließend gibt man innerhalb von 5 Stunden bei einer Temperatur von 80°C eine Lösung von 133,6 g Acrylsäure in 141,9 g Wasser und innerhalb von 6 Stunden jeweils getrennt davon Lösungen von 5,7 g 50 %igem Wasserstoffperoxid in 40 g Wasser und 2,85 g Natriumpersulfat in 40 g Wasser gleichmäßig zu. Anschließend wird das Reaktionsgemisch noch 2 Stunden nacherhitzt. Der Neutralisationsgrad der in den Copolymerisaten jeweils enthaltenen Maleinsäure- und Acrylsäure-Einheiten beträgt 31,13 %. Die Mengen für Wasser und Naturstoff sowie die Daten der Polymerisatlösungen sind in Tabelle 1 angegeben. Die in den Beispielen 13, 15, 16 und 17 eingesetzten Naturstoffe sind Stärkeverzuckerungsprodukte (Maltodextrine und Glukosesirupe), die die folgenden Komponenten enthalten:

| Beispiel | 13 | 15 | 16 | 17 |
|---|---|---|---|---|
| Dextrose [%] | 0,5 | 17 | 10 | 95 |
| Maltose [%] | 3,5 | 15 | 11 | |
| Maltotriose [%] | 6,0 | 6 | 14 | 5 |
| höhere Zucker [%] | 90 | 62 | 65 | |

Tabelle 1

| Bsp. Nr. | Eingesetzte Stoffe: Wasser [g] | Eingesetzte Stoffe: Naturstoff Art | Eingesetzte Stoffe: Menge [g] | Polymerlösung: Aussehen | Polymerlösung: Feststoffgehalt [%] | Polymerlösung: K-Wert | Polymerlösung: pH-Wert |
|---|---|---|---|---|---|---|---|
| 13 | 243,1 | Maltodextrin, DE-Wert 11-14 | 160 | fast klar, farblos, viskos | 42,8 | 70 | 4,1 |
| 14 | 253,1 | Na-Salz von Carboximethylcellulose, 94 %ig | 170,2 | trüb, hellbraun, hochviskos | 29,5 | unlösl. | 4,0 |
| 15 | 230 | Maltodextrin, DE-Wert 40 (82,2 %ig) | 195 | klar, farblos, schw. viskos | 40,3 | 57,5 | 3,7 |
| 16 | 230 | Maltodextrin, DE-Wert 30 (81,6 %ig) | 196 | klar, hellgelb, schw. viskos | 40,5 | 55,6 | 3,9 |
| 17 | 210 | Glukosesirup, DE-Wert 96 (74,8 %ig) | 214 | schw. trüb, hellgelb, viskos | 37,2 | 49,7 | 3,9 |
| 18 | 243,1 | D-Mannit | 160 | klar, gelblich, viskos | 42,0 | 51,5 | 3,9 |
| 19 | 230 | Weizenstärke (86 %ig) | 186 | trüb, hellbraun, viskos | 43,7 | 36,9 | 4,0 |
| 20 | 250 | Fructose | 160 | klar, bräunlich, schw. viskos | 37,3 | 45,6 | 3,8 |
| 21 | 243,1 | Saccharose | 160 | klar, braun, viskos | 38,5 | 45,9 | 4,0 |
| 22 | 83,1 | Gluconsäure (50 %ig) | 320 | klar, braun, viskos | 38,7 | 41,5 | 3,3 |
| 23 | 243,1 | Sorbit | 160 | schw. trüb, gelblich, viskos | 41,8 | 62,8 | 4,1 |

Beispiel 24

In dem in Beispiel 1 beschriebenen Reaktor werden 248,9 g Maltodextrin mit einem DE-Wert von 11 bis 14, 543,5 g Wasser, 75,75 g Maleinsäureanhydrid und 111,3 g 50 %ige Natronlauge vorgelegt und zum Sieden erhitzt. Der Neutralisationsgrad der entstehenden Maleinsäure beträgt 90 %. Unmittelbar nach Siedebeginn gibt man innerhalb von 5 Stunden eine Mischung aus 89,7 g Acrylsäure, 119,63 g Hydroxypropylacrylat (Isomerengemisch) und 106,65 g Wasser und separat davon innerhalb von 6 Stunden Lösungen von 9,98 g 30 %igem Wasserstoffperoxid in 60 g Wasser und von 6 g Natriumpersulfat in 69 g Wasser gleichmäßig zu und polymerisiert beim Sieden der Mischung. Nach der Initiatorzugabe wird das Reaktionsgemisch noch 1 Stunde zum Sieden erhitzt. Der Neutralisationsgrad der einpolymerisierten Maleinsäure- und Acrylsäureeinheiten beträgt 49,8 %. Nach Abschluß der Copolymerisation fügt man 92 g 50 %iger wäßriger Natronlauge bis zu einem pH-Wert von 7 zu. Die so erhältliche klare, bräunliche, viskose Lösung besitzt einen Feststoffgehalt von 38,5 %. Das Pfropfcopolymerisat hat einen K-Wert von 33 und enthält 1,1 % nichtpolymerisierte Maleinsäure.

Beispiel 25

In dem in Beispiel 1 angegebenen Reaktor werden 290 g Maltodextrin mit einem DE-Wert von 11 bis 14, 470 g Wasser, 4,2 ml 0,1 %ige wäßrige Lösung von Eisen-II-ammoniumsulfat, 101,38 g Maleinsäureanhydrid und 74,52 g Natriumhydroxid vorgelegt und zum Sieden erhitzt. Der Neutralisationsgrad der dabei entstehenden Maleinsäure beträgt 90 %. Unmittelbar nach Siedebeginn gibt man innerhalb von 5 Stunden eine Mischung aus 120 g Acrylsäure und 114,4 g einer 58 %igen wäßrigen Lösung des Natriumsalzes der Acrylamidomethylpropansulfonsäure und innerhalb von 6 Stunden 80 g 30 %iges Wasserstoffperoxid und eine Lösung von 24 g Natriumpersulfat in 72 g Wasser gleichmäßig zu und polymerisiert beim Siedepunkt des Gemisches. Nach Beendigung der Initiatorzugabe wird das Reaktionsgemisch noch 1 Stunde zum Sieden erhitzt. Der Neutralisationsgrad der Säuregruppen beträgt 53,5 %. Nach Beendigung der Polymerisation neutralisiert man das Reaktionsgemisch durch Zugabe von 155 g 50 %iger wäßriger Natronlauge. Man erhält eine klare braune Lösung mit einem Feststoffgehalt von 42,3 %. Das Pfropfcopolymerisat hat einen K-Wert von 27,6 und einen Restgehalt an monomerer Maleinsäure von 0,01 %.

Beispiel 26

Eine gemäß Beispiel 2 hergestellte Pfropfcopolymerisatlösung wird zum Sieden erhitzt. In die siedende Mischung dosiert man innerhalb von 8 Stunden gleichmäßig 131 g 30 %iges Wasserstoffperoxid. Man erhält eine klare, gelbe viskose Lösung mit einem Feststoffgehalt von 38 %. Der K-Wert des Copolymerisats beträgt 32.

Beispiele 27 bis 34

In einem Reaktor gemäß Beispiel 1 werden 231,4 g Wasser, 323 g der 80 %igen wäßrigen Lösung eines Maltodextrins mit einem DE-Wert von 30, 77,1 g Maleinsäureanhydrid, 0,91 g phosphorige Säure, 3,04 g Natriumdisulfit, 4,24 g 0,1 %ige wäßrige Eisen-II-Ammoniumsulfatlösung im schwachen Stickstoffstrom auf 55°C erhitzt. Nun werden innerhalb von 15 Minuten 113,4 g 50 %ige Natronlauge zudosiert und dabei die Temperatur auf 85°C erhöht. Anschließend wird eine Monomerenmischung der in Tabelle 2 beschriebenen Zusammensetzung gleichmäßig in 5 Std. und eine Lösung von 30,4 g 30 %igem Wasserstoffperoxid in 50 g Wasser gleichmäßig in 6 Std. bei 85°C im schwachen Stickstoffatom zudosiert. Nun wird noch 1 Std. bei 85°C nacherhitzt, abgekühlt und mit 50 %iger Natronlauge bis zu einem pH-Wert von ca. 7 neutralisiert.

Aussehen, Feststoffgehalt und pH-Wert der Polymerisatlösung sowie die K-Werte der erhaltenen Pfropfcopolymerisate sind ebenfalls in Tabelle 2 angegeben.

Tabelle 2

| Beispiel Nr. | Monomerenmischung | Polymerisatlösung Aussehen | Feststoffgeh. [%] | K-Wert | pH-Wert |
|---|---|---|---|---|---|
| 27 | 197,9 g Acrylsäure<br>15,2 g Acrylamid<br>150,0 g Wasser | gelblich, trüb, viskos | 49,4 | 36,3 | 7,4 |
| 28 | 197,9 g Acrylsäure<br>15,2 g Hydroxiethylacrylat<br>200,0 g Wasser | farblos, trüb, viskos | 48,0 | 45,9 | 7,0 |
| 29 | 197,9 g Acrylsäure<br>15,4 g Acrylnitril<br>150,0 g Wasser | gelblich, trüb, viskos | 48,0 | 42,5 | 7,4 |
| 30 | 184,7 g Acrylsäure<br>30,8 Methylacrylat<br>150,0 g Wasser | farblos, trüb, viskos | 48,1 | 44,3 | 7,2 |
| 31 | 184,7 g Acrylsäure<br>30,8 g Vinylacetat<br>150,0 g Wasser | farblos, trüb, viskos | 47,5 | 42,1 | 7,4 |

Tabelle 2 (Fortsetzung)

| Beispiel Nr. | Monomerenmischung | Polymerisatlösung Aussehen | Feststoffgeh. [%] | K-Wert | pH-Wert |
|---|---|---|---|---|---|
| 32 | 184,7 g Acrylsäure<br>30,8 g Dimethylamino-propylmethacrylamid<br>150,0 g Wasser | gelblich, trüb, viskos | 48,8 | 34,1 | 7,2 |
| 33 | 171,1 g Acrylsäure<br>15,5 g Vinylacetat<br>15,5 g Methylacrylat<br>15,5 g Hydroxipropylacrylat<br>150,0 g Wasser | farblos, trüb, viskos | 47,3 | 42,6 | 7,2 |
| 34 | 207,9 g Acrylsäure<br>5,2 g Polyethylenglykol mit Molgewicht 1500-Diacrylat<br>150,0 g Wasser | farblos, fast klar, stark viskos | 48,5 | 76,1 | 7,1 |

Beispiel 35

In einem Reaktor gemäß Beispiel 1 werden 154,5 g Wasser, 316 g Hydroxipropylkartoffelstärke, 80 %ig (Viskosität in 10 %igen wäßrigen Lösung bei 20°C 100 mPas) 74,2 g Maleinsäureanhyddrid, 0,88 g phosphorige Säure und 2,93 g Natriumdisulfit im schwachen Stickstoffatom auf 55°C erhitzt. Nach Erreichen der 50°C werden 109 g 50 %ige Natronlauge zudosiert und gleichzeitig die Temperatur auf 80°C erhöht. Nun werden innerhalb von 5 Std. eine Lösung von 204,9 g Acrylsäure und 180 g Wasser und innerhalb von 6 Std. eine Lösung von 8,78 g 50 %igem Wasserstoffperoxid in 46 g Wasser sowie eine Lösung von 4,39 g Natriumpersulfat in 57,6 g Wasser gleichmäßig bei 80°C im schwachen Stickstoffstrom zudosiert. Anschließend wird noch 1 Std. bei 80°C nacherhitzt, abgekühlt und mit 50 %iger Natronlauge bis zu einem pH-Wert von 6,8 neutralisiert und dann mit 230 g Wasser verdünnt. Die erhaltene klare, fast farblose hochviskose Lösung besitzt einen Feststoffgehalt von 41,1 % und der K-Wert des Polymeren ist 81,9.

Beispiele 36 bis 39

In einem Reaktor gemäß Beispiel 1 werden 154,5 g Wasser 316 g Maltodextrin mit einem DE-Wert von 40, 74,2 g Maleinsäureanhydrid, 0,88 g phosphorige Säure und 2,53 g Natriumdisulfit im schwachen Stickstoffstrom auf 55°C erhitzt. Nach Erreichen dieser Temperatur wird mit 109 g 50 %iger Natronlauge neutralisiert und die Temperatur auf 80°C erhöht. Nun werden innerhalb von 5 Std. eine Lösung von 204,9 g Acrylsäure und 180 g Wasser und innerhalb von 6 Std. eine Initiatorlösung, wie sie in nachfolgender Tabelle Nr. 3 aufgeführt ist, gleichmäßig bei 80°C im schwachen Stickstoffstrom zudosiert. Anschließend wird noch 1 Std. bei 80°C nacherhitzt, abgekühlt und mit 50 %iger Natronlauge bis zu einem pH-Wert von 7 neutralisiert und mit 230 g Wasser verdünnt. Aussehen, Feststoffgehalt und K-Wert ist aus der Tabelle 3 zu ersehen.

Tabelle 3

| Beispiel Nr. | Initiatorlösung | Polymerisatlösung Aussehen | Feststoffgeh. [%] | K-Wert |
|---|---|---|---|---|
| 36 | 8,5 g 2,2'-Azobis(2-methylpropionamidin)dihydrochlorid<br>100 g Wasser | bräunlich, klar, viskos | 42,1 | 65 |
| 37 | 8,5 g 2,2'-Azobis[2(2-imidazolin-2-yl)propan]dihydrochlorid<br>100 g Wasser | braun, klar, viskos | 42,0 | 66 |
| 38 | 11,5 g tert.-Butylperoxipivalat 75 %ig in Aliphaten<br>50 g Isopropanol | gelb, trüb, viskos | 41,6 | 58 |
| 39 | 8,5 g tert.-Butylperethylhexanoat<br>50 g Isopropanol | gelb, trüb, viskos | 41,5 | 59 |

Vergleichsbeispiele

Vergleichsbeispiel 1 (gemäß JP-A-61/31498)

In dem in Beispiel 1 angegebenen Reaktor werden 34 g Dextrose und 400 g Wasser unter einer Stickstoffatmosphäre 1 Stunde auf eine Temperatur von 80°C erhitzt. Das Reaktionsgemisch wird dann auf 30°C abgekühlt. Man fügt 66 g Acrylsäure, 0,005 g L-Ascorbinsäure und 0,05 g 30 %iges Wasserstoffperoxid zu und polymerisiert die Mischung bei einer Temperatur von 50°C innerhalb von 4 Stunden. Nach Abschluß der Polymerisation wird der pH-Wert durch Zugabe von 30 %iger wäßriger Natronlauge auf 7 eingestellt. Man erhält eine hochviskose, trübe Lösung mit einem Feststoffgehalt von 18 %. Der K-Wert des Polymerisats beträgt 172.

Vergleichsbeispiel 2

In dem in Beispiel 1 beschriebenen Reaktor werden 265,6 g Maltodextrin mit einem DE-Wert von 11 bis 14, 398,4 g Wasser und 1,8 g phosphorige Säure vorgelegt und in einem Stickstoffstrom auf 95°C erhitzt. Innerhalb von 4 Stunden fügt man dazu 294,6 g Acrylsäure und eine Lösung von 13,2 g 2-Mercaptoethanol in 55 g Wasser und separat davon innerhalb von 4,5 Stunden eine Lösung von 2,94 g Natriumpersulfat in 70 g Wasser bei 95°C gleichmäßig zu. Das Reaktionsgemisch wird nach der Initiatorzugabe noch 1 Stunde bei 95°C erhitzt. Dann entfernt man mit Hilfe einer Wasserdampfdestillation das nicht in das Pfropfpolymerisat eingebaute Mercaptoethanol. Danach wird das Reaktionsgemisch durch Zugabe von 335 g 50 %iger wäßriger Natronlauge bis zu einem pH-Wert von 7 neutralisiert. Die hellbraune, trübe Lösung hat einen Feststoffgehalt von 37,3 %. Das Copolymerisat besitzt einen K-Wert von 22,9.

Vergleichsbeispiel 3

80 g der 40 %igen wäßrigen Lösung des Natriumsalzes eines Copolymerisats aus 70 Gew.% Acrylsäure und 30 Gew.% Maleinsäure vom K-Wert 60 werden mit 20 g einer 40 %igen Lösung von Dextrin weiß gut vermischt. Die Mischung wird als Zusatz zu Waschmitteln getestet.

Vergleichsbeispiel 4

70 g der 40 %igen wäßrigen Lösung des Natriumsalzes eines Copolymerisats aus 70 Gew.% Acrylsäure und 30 Gew.% Maleinsäure vom K-Wert 60 werden mit 30 g einer 40 %igen Lösung von Dextrin weiß gut gemischt.

Vergleichsbeispiel 5

60 g einer 40 %igen wäßrigen Lösung des Natriumsalzes eines Copolymerisates aus 70 Gew.% Acrylsäure und 30 Gew.% Maleinsäure vom K-Wert 60 werden mit 40 g einer 40 %igen Lösung eines Dextrins vom Noredux-Typ (Noredux E 200 der Fa. Cerestar) gut gemischt.

Vergleichsbeispiel 6

60 g einer 40 %igen wäßrigen Lösung des Natriumsalzes eines Copolymerisats aus 70 Gew.% Acrylsäure und 30 Gew.% Maleinsäure vom K-Wert 60 werden mit 40 g einer 40 %igen Lösung von Dextrose gemischt.

Vergleichsbeispiel 7

60 g einer 40 %igen wäßrigen Lösung des Natriumsalzes eines Copolymerisats aus 70 Gew.% Acrylsäure und 30 Gew.% Maleinsäure vom K-Wert 60 werden mit 40 g einer 40 %igen Suspension von Kartoffelstärke gut gemischt.

Vergleichsbeispiel 8

Eine 40 %ige Lösung des Natriumsalzes eines Copolymerisats aus 70 Gew.% Acrylsäure und 30 Gew.% Maleinsäure vom K-Wert 60 wird als Zusatz zu Waschmittelformulierungen getestet.

Anwendungstechnische Beispiele

Um die inkrustierungsinhibierende Wirkung der oben beschriebenen Pfropfcopolymerisate zu testen, wurden die Polymerisate jeweils in zwei unterschiedliche pulverförmige Waschmittel A und B eingearbeitet. Mit diesen Waschmittelformulierungen wurden jeweils Testgewebe aus Baumwollgewebe gewaschen. Die Zahl der Waschzyklen betrug 10. Nach jedem Zyklus wurde das Gewebe trockengebügelt. Nach dieser Anzahl von Wäschen wurde der Aschegehalt des Gewebes ermittelt, indem man das Testgewebe jeweils veraschte. Je wirksamer das im Waschmittel enthaltende Polymerisat ist, desto geringer ist der Aschegehalt des Testgewebes und desto höher ist die angegebene prozentuale Wirksamkeit, d.h. 0 % Wirksamkeit bedeutet den erzielbaren Aschegehalt bzw. Inkrustationsaufbau ohne Additiv in der Waschmittelformulierung. 100 % Wirksamkeit bedeutet, daß der Inkrustationsinhibitor eine Ablagerung vollständig verhindert. Eine negative Wirkung bzw. eine Wirkung, die kleiner als Null ist, bedeutet, daß die Substanz eine inkrustationsfördernde Eigenschaft besitzt. Dies ist gleichbedeutend damit, daß der Aschegehalt mit Polymerzusatz höher ist als ohne Polymerzusatz.

Für die Berechnung der Wirksamkeit "W" aus den Aschegehalten wird folgende Formel verwendet.

$$W = \left(1 - \frac{\text{Aschegehalt mit Polymer}}{\text{Aschegehalt ohne Polymerzusatz}}\right) \cdot 100$$

Das Baumwollgewebe zeigte nach den 10 Waschzyklen bei Verwendung von Waschmittel A einen Aschegehalt von 4,14 % und bei Waschmittel B von 2,33 %.

Versuchsbedingungen für die Ermittlung der Inkrustierung:

| | |
|---|---|
| Gerät | Launder-O-Meter der Fa. Atlas, Chicago |
| Zahl der Waschzyklen: | 10 |
| Waschflotte: | 250 g, wobei das verwendete Wasser 4mMol Härte pro Liter aufweist (Molverhältnis Calcium zu Magnesium = 3 : 1) |
| Waschdauer: | 30 min bei 60°C (einschließlich Aufheizzeit) |
| Waschmitteldosierung: | 8 g/l |
| Baumwollgewebe: | 20 g |

Waschmittel A (phosphatfrei)

| | |
|---|---|
| 12.5 % | Dodecylbenzolsulfonat (50%) |
| 4,7 % | $C_3/C_{15}$-Oxoalkoholpolyglykolether, der 7 Ethylenoxid-Einheiten enthält |
| 2,8 % | Seife |
| 25 % | Zeolith A |
| 12 % | Natriumcarbonat |
| 4 % | Na-Disilikat |
| 1 % | Mg-Silikat |
| 20 % | Natriumperborat |
| 5 % | Polymerisat gemäß den Beispielen und den Vergleichsbeispielen (jeweils berechnet 100 %ig) |
| 0,6 % | Na-Carboxymethylcellulose |
| Rest auf 100% Natriumsulfat | |

Waschmittel B (phosphatreduziert)

| | |
|---|---|
| 12.5 % | Dodecylbenzolsulfonat (50%) |
| 4,7 % | $C_{13}/C_{15}$-Oxoalkoholpolyglykolether, der 7 Ethylenoxid-Einheiten enthält |
| 2,8 % | Seife |
| 9,25 % | Pentanatriumtriphosphat |
| 0,7 % | Natriumdiphosphat |

Fortsetzung der Tablelle auf der nächsten Seite

(fortgesetzt)

| | |
|---|---|
| 0,05 % | Natriumorthophosphat |
| 24 % | Zeolith A |
| 4 % | Na-Disilikat |
| 1 % | Mg-Silicat |
| 20 % | Natriumperborat |
| 3 % | Polymerisat gemäß den Beispielen und den Vergleichsbeispielen (jeweils berechnet 100 %ig) |
| Rest auf 100% Natriumsulfat | |

Tabelle 2:

| Inkrustationsinhibierung der erfindungsgemäßen Polymeren | | | |
|---|---|---|---|
| Beispiel | Pfropfcopolymer hergestellt gemäß Beispiel | Wirkung (%) in | |
| | | Waschmittel A | Waschmittel B |
| 40 | 1 | 48,8 | 75,6 |
| 41 | 2 | 57,7 | 71,6 |
| 42 | 3 | 52,0 | 64,6 |
| 43 | 4 | 48,4 | 75,6 |
| 44 | 5 | 54,6 | 69,3 |
| 45 | 6 | 50,3 | 72,2 |
| 46 | 7 | 53,0 | 76,4 |
| 47 | 9 | 47,0 | 62,0 |
| 48 | 10 | 30,3 | 44,7 |
| 49 | 12 | 51,5 | 75,6 |
| 50 | 13 | 52,5 | 76,0 |
| 51 | 14 | 54,5 | 77,5 |
| 52 | 15 | 50,5 | 77,0 |
| 53 | 16 | 59,9 | 78,9 |
| 54 | 17 | 53,0 | 77,9 |
| 55 | 18 | 53,0 | 74,4 |
| 56 | 19 | 51,5 | 78,0 |
| 57 | 20 | 40,3 | 78,5 |
| 58 | 21 | 50,5 | 78,7 |

Die Pfropfcopolymerisate 22 bis 39 ergeben bei der Prüfung auf Inkrustationsinhibierung im Waschmittel B analog den Beispielen 40 bis 58 Wirkungen von 59 bis 77 %. Diese Werte liegen damit deutlich oberhalb der Wirkungen der in den Vergleichsbeispielen 1 bis 7 als Inkrustationsinhibitoren getesteten Verbindungen.

Tabelle 3:

| Inkrustationsinhibierung der Polymeren gemäß den Vergleichsbeispielen | | |
|---|---|---|
| Polymer gemäß Vergleichsbeispiel Nr. | Wirkung (%) in | |
| | Waschmittel A | Waschmittel B |
| 1 | -41 | -50 |
| 2 | 40 | 19,9 |
| 3 | 45,8 | 55,6 |
| 4 | 40,8 | 49,2 |
| 5 | 31,9 | 47,5 |
| 6 | 41,3 | 45,1 |

Fortsetzung der Tablelle auf der nächsten Seite

Tabelle 3: (fortgesetzt)

| Inkrustationsinhibierung der Polymeren gemäß den Vergleichsbeispielen | | |
|---|---|---|
| Polymer gemäß Vergleichsbeispiel Nr. | Wirkung (%) in | |
| | Waschmittel A | Waschmittel B |
| 7 | 36,7 | 45,0 |
| 8 | 52,0 | 78,7 |

Die anwendungstechnischen Ergebnisse bezüglich der Inkrustationsinhibierung zeigen, daß die erfindungsgemäßen Polymeren in Tabelle 2 eine deutlich größere Wirkung besitzen als die Pfropfpolymeren in Tabelle 3 gemäß dem Stand der Technik (Vergleichsbeispiele 1 und 2).

Ein Vergleich der physikalischen Mischungen aus Naturstoff und handelsüblichem Copolymer (dieses Copolymerisat ist ein hochwirksamer Inkrustationsinhibitor gemäß EP-B-0025551) (vgl. Vergleichsbeispiele 3 bis 7) mit den erfindungsgemäßen Polymeren 1, 3, 5, 7, 11 zeigt, daß die erfindungsgemäßen Pfropfcopolymeren deutlich höher in der Wirkung sind, als die entsprechenden Mischungen.

Vergleicht man die erfindungsgemäßen Pfropfcopolymeren mit einem handelsüblichen Copolymeren (Vergleichsbeispiel 8), so stellt man überraschenderweise fest, daß die erfindungsgemäßen Polymeren trotz des hohen Naturstoffanteils besonders in der ökologisch zukunftsträchtigen phosphatfreien Waschmittelformulierung teilweise besser sind.

Dieser Effekt ist besonders überraschend, da durch die Anwesenheit des carboxylgruppenfreien bzw. carboxylgruppenarmen Naturstoffs der Anteil an Carboxylgruppen in den erfindungsgemäßen Pfropfcopolymeren besonders stark im Vergleich zu dem reinen Copolymeren (Vergleichsbeispiel 8) aus Acrylsäure und Maleinsäure reduziert wird.

Am Pfropfcopolymerisat nach Beispiel 5 wurde im Vergleich zum Copolymerisat des Vergleichsbeispiels 8 der biologische Abbau nach Zahn-Wellens (DIN 38 142, Teil 24, Statischer Test (L 25)) untersucht. Die Kohlenstoffabnahme nach verschiedenen Zeiten zeigt Tabelle 4.

Tabelle 4

| Polymer gemäß | C-Abnahme in % nach | | | | |
|---|---|---|---|---|---|
| | 3 h | 1 Tg | 2 Tg | 14 Tg | 28 Tg |
| Beispeil 5 | 38 | 48 | 57 | 74 | 98 |
| Vergl. Beispiel 8 | 95 | 96 | 98 | 100 | - |

Während das Copolymerisat gemäß Vergleichsbeispiel 8 eindeutig Elimination am Klärschlamm zeigt, kann bei dem erfindungsgemäßen Pfropfcopolymerisat gemäß Beispiel 5 zumindest auf teilweisen biologischen Abbau geschlossen werden.

Beispiele 59 bis 63

Nach der oben angegebenen Vorschrift wurde die inkrustierungsinhibierende Wirkung des nach Beispiel 17 hergestellten Pfropfcopolymerisats in Gegenwart von Bleichaktivatoren untersucht. Hierbei wurden zunächst die in Tabelle 5 angegebenen Bleichaktivatoren jeweils in einer Menge von 3 % dem oben beschriebenen Waschmittel B zugesetzt und der Aschegehalt ohne Polymerzusatz ermittelt. Für die Bestimmung des Aschegehalts mit Polymer wurden die in Tabelle 5 jeweils angegebenen Bleichaktivatoren in einer Menge von 3 % dem Waschmittel B zugesetzt und außerdem noch jeweils 3 % des nach Beispiel 17 hergestellten Pfropfcopolymerisats in Form des Na-Salzes. Aus den beiden ermittelten Meßreihen für die Aschegehalte wurde, wie oben angegeben, die Wirksamkeit "W" errechnet. Diese Werte sind in Tabelle 5 angegeben.

Tabelle 5

| Inkrustationsinhibierung des Na-Salzes des gemäß Beispiel 17 hergestellten Pfropfcopolymerisats in Gegenwart von Bleichaktivatoren im Waschmittel B. | | |
|---|---|---|
| Beispiel | Bleichaktivator | Wirkung % |
| 59 | Tetraacetylethylendiamin | 79,6 |
| 60 | Pentaacetylglucose | 77,5 |

Fortsetzung der Tablelle auf der nächsten Seite

Tabelle 5 (fortgesetzt)

| Inkrustationsinhibierung des Na-Salzes des gemäß Beispiel 17 hergestellten Pfropfcopolymerisats in Gegenwart von Bleichaktivatoren im Waschmittel B. | | |
|---|---|---|
| Beispiel | Bleichaktivator | Wirkung % |
| 61 | Tetraacetylglucouril | 75,3 |
| 62 | Dodecyloxibenzolsulfonat | 80,7 |
| 63 | Diacetyl-dioxo-hexahydro-triazin | 76,7 |
| Vgl. Bsp. 9 | ohne Bleichaktivator | 77,9 |

Ein Vergleich der Wirksamkeiten aus Tabelle 5 mit dem Copolymer gemäß Vergleichsbeispiel 8 (vgl. Tabelle 3) zeigt, daß das nach Beispiel 17 hergestellte Pfropfcopolymer in Kombination mit Bleichaktivatoren ein sehr guter Inkrustationsinhibitor ist.

Die oben beschriebenen Pfropfcopolymerisate zeigen auch in Gegenwart von anderen Waschmitteladditiven, wie beispielsweise Komplexbildnern, Vergrauungsinhibitoren oder Dispergiermitteln, sehr gute Inkrustationsinhibierung. In Tabelle 6 sind Ergebnisse von Beispielen angegeben, in denen das nach Beispiel 17 hergestellte Pfropfcopolymerisat in Form des Na-Salzes in Gegenwart von verschiedenen anderen Waschmitteladditiven (in Tabelle 6 als Additiv bezeichnet) in Waschmittel B auf seine inkrustationsinhibierende Wirkung untersucht wurde. Die Zusammensetzung der Waschmittelformulierung der Beispiele 64 bis 69 kann der Tabelle 6 entnommen werden.

Tabelle 6

| Beispiel | % Pfropfcopolymer im Waschmittel B | % Additiv im Waschmittel B | Inkrustations-inhibierung Wirkung % |
|---|---|---|---|
| 64 | 3 | 0,5 ISDA | 80,7 |
| 65 | 3 | 0,5 NTA | 80,0 |
| 66 | 1,5 | 1,5 Copolymer gemäß Vergl. Bsp. 8 | 78,6 |
| 67 | 1,5 | 1,5 Homopolyacrylsäure-Na-Salz | 74,5 |
| 68 | 3,0 | 0,5 Pfropfcopolymer PEO/VAc | 81,0 |
| 69 | 3,0 | 0,5 Oligoester | 75,6 |

ISDA = Isoserindiessegsäure-Na-Salz
NTA = Nitrilotriacetat-Na-Salz
Homopolyacrylsäure-Na-Salz mit K-Wert 30
Pfropfcopolymer PEO/VAc = Pfropfpolymer von Vinylacetat auf Polyethylenoxid mit Molmasse (Zahlenmittel) von 6000 g/mol im Gewichtsverhältnis 1,6 : 1 gemäß US-PS 4 746 456 Oligoester = Oligoester aus Tetraphthalsäure/Ethylenglykol/PEO der Molmasse (Zahlenmittel) = 1500 g/mol im Gewichtsverhältnis 19,4 : 3,5 : 77,1.

Außerdem können andere Builder und/oder Cobuilder sowie Kombinationen untereinander eingesetzt werden. Zu nennen sind in diesem Zusammenhang Zeolithe, Bentonit, vernetzte Polycarboxylate aus Acrylsäure, Maleinsäure und anderen ungesättigten Carbonsäuren bzw. Dicarbonsäuren, Hydroximono(di, tri)carbonsäuren, z.B. Zitronensäure oder Weinsäure.

## Patentansprüche

### Patentansprüche für folgende Vertragsstaaten : BE, CH, LI, DE, FR, GB, IT, NL, SE

1. Pfropfcopolymerisate von Monosacchariden, Oligosacchariden, Polysacchariden und den unter (B) angegebenen Derivaten, dadurch gekennzeichnet, daß sie erhältlich sind durch radikalisch initiierte Copolymerisation von

    (A) Monomermischungen aus

        (a) 90 bis 10 Gew.% monoethylenisch ungesättigten $C_4$- bis $C_8$-Dicarbonsäuren, deren Anhydriden oder Alkali- und/oder Ammoniumsalzen,

        (b) 10 bis 90 Gew.% Acrylsäure, Methacrylsäure, Dimethylacrylsäure, Ethylacrylsäure, Allylessigsäure, Vinylessigsäure, deren Gemische oder deren Alkali- und/oder Ammoniumsalzen,

        (c) 0 bis 40 Gew.% anderen monoethylenisch ungesättigten Monomeren, die mit den Monomeren (a) und (b) copolymerisierbar sind, und

        (d) 0 bis 5 Gew.% mindestens zwei ethylenisch ungesättigte nicht konjugierte Doppelbindungen im Molekül aufweisende Monomere

    in Gegenwart von

    (B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- und Polysacchariden oder Mischungen der genannten Verbindungen

    im Gewichtsverhältnis (A):(B) von (95 bis 20):(5 bis 80).

2. Verfahren zur Herstellung von Pfropfcopolymerisaten von Monosacchariden, Polysacchariden und deren Derivaten durch radikalisch initiierte Copolymerisation von (A) 95 bis 20 Gew.% ethylenisch ungesättigten Monomeren in Gegenwart von (B) 5 bis 80 Gew.% mindestens eines Monosaccharids, Oligosaccharids, Polysaccharids, abgebauten oder chemisch modifizierten Mono-, Oligo- und Polysaccharids oder deren Mischungen in einem inerten Verdünnungsmittel bei Temperaturen bis zu 180°C, dadurch gekennzeichnet, daß man als ethylenisch ungesättigte Monomere (A) Mischungen aus

    (a) 90 bis 10 Gew.% monoethylenisch ungesättigten $C_4$- bis $C_8$-Dicarbonsäuren, deren Anhydriden oder Alkali- und/oder Ammoniumsalzen,

    (b) 10 bis 90 Gew.% Acrylsäure, Methacrylsäure, Dimethylacrylsäure, Ethylacrylsäure, Allylessigsäure, Vinylessigsäure, deren Gemische oder deren Alkali- und/oder Ammoniumsalzen,

    (c) 0 bis 40 Gew.% anderen monoethylenisch ungesättigten Monomeren, die mit den Monomeren (a) und (b) copolymerisierbar sind, und

    (d) 0 bis 5 Gew.% mindestens zwei ethylenisch ungesättigte, nicht konjugierte Doppelbindungen im Molekül aufweisende Monomeren

    einsetzt.

3. Verfahren nach Anspruch 2, dadurch gekennzeichnet, daß man bei der Pfropfcopolymerisation die Monomeren (a) und mindestens einen Teil der Verbindungen der Komponente (B) in wäßrigem Medium vorlegt und die Monomeren (b) sowie gegebenenfalls die Monomeren (c) und/oder (d) kontinuierlich oder absatzweise mit der gegebenenfalls noch vorhandenen restlichen Menge an Verbindungen der Komponente (B) dem polymerisierenden Reaktionsgemisch zufügt und in der Weise copolymerisiert, daß der Neutralisationsgrad der einpolymerisierten Monomer-Einheiten (a) und (b) und gegebenenfalls (c) nach Abschluß der Pfropfcopolymerisation 20 bis 80 % beträgt.

4. Verfahren nach Anspruch 3, dadurch gekennzeichnet, daß man ein wasserunlösliches Polysaccharid zunächst in wäßriger Suspension unter Zusatz von Enzymen und/oder Säuren oder durch thermische und/oder mechanische Behandlung in eine wasserlösliche oder in Wasser dispergierbare Form überführt und die dabei erhältliche wäßrige Lösung oder wäßrige Dispersion des abgebauten Polysaccharids der Pfropfcopolymerisation unterwirft.

5. Verfahren nach Anspruch 2 oder 3, dadurch gekennzeichnet, daß man als Komponente (B) säurekatalytisch oder enzymatisch abgebaute Stärken einsetzt.

6. Verwendung der Pfropfcopolymerisate nach Anspruch 1 als Zusatz zu Wasch- und Reinigungsmitteln in Mengen von 0,1 bis 20 Gew.%, bezogen auf die jeweiligen Formulierungen.

**Patentansprüche für folgenden Vertragsstaat : ES**

1. Verfahren zur Herstellung von Pfropfcopolymerisaten von Monosacchariden, Polysacchariden und den unter (B) angegebenen Derivaten durch radikalisch initiierte Copolymerisation von (A) 95 bis 20 Gew.% ethylenisch ungesättigten Monomeren in Gegenwart von (B) 5 bis 80 Gew.% mindestens eines Monosaccharids, Oligosaccharids, Polysaccharids, abgebauten oder chemisch modifizierten Mono-, Oligo- und Polysaccharids oder deren Mischungen in einem inerten Verdünnungsmittel bei Temperaturen bis zu 180°C, dadurch gekennzeichnet, daß man als ethylenisch ungesättigte Monomere (A) Mischungen aus

   (a) 90 bis 10 Gew.% monoethylenisch ungesättigten $C_4$- bis $C_8$-Dicarbonsäuren, deren Anhydriden oder Alkali- und/oder Ammoniumsalzen,

   (b) 10 bis 90 Gew.% Acrylsäure, Methacrylsäure, Dimethylacrylsäure, Ethylacrylsäure, Allylessigsäure, Vinylessigsäure, deren Gemische oder deren Alkali- und/oder Ammoniumsalzen,

   (c) 0 bis 40 Gew.% anderen monoethylenisch ungesättigten Monomeren, die mit den Monomeren (a) und (b) copolymerisierbar sind, und

   (d) 0 bis 5 Gew.% mindestens zwei ethylenisch ungesättigte, nicht konjugierte Doppelbindungen im Molekül aufweisende Monomeren

   einsetzt.

2. Verfahren nach Anspruch 1, dadurch gekennzeichnet, daß man bei der Pfropfcopolymerisation die Monomeren (a) und mindestens einen Teil der Verbindungen der Komponente (B) in wäßrigem Medium vorlegt und die Monomeren (b) sowie gegebenenfalls die Monomeren (c) und/oder (d) kontinuierlich oder absatzweise mit der gegebenenfalls noch vorhandenen restlichen Menge an Verbindungen der Komponente (B) dem polymerisierenden Reaktionsgemisch zufügt und in der Weise copolymerisiert, daß der Neutralisationsgrad der einpolymerisierten Monomer-Einheiten (a) und (b) und gegebenenfalls (c) nach Abschluß der Pfropfcopolymerisation 20 bis 80 % beträgt.

3. Verfahren nach Anspruch 2, dadurch gekennzeichnet, daß man ein wasserunlösliches Polysaccharid zunächst in wäßriger Suspension unter Zusatz von Enzymen und/oder Säuren oder durch thermische und/oder mechanische Behandlung in eine wasserlösliche oder in Wasser dispergierbare Form überführt und die dabei erhältliche wäßrige Lösung oder wäßrige Dispersion des abgebauten Polysaccharids der Pfropfcopolymerisation unterwirft.

4. Verfahren nach Anspruch 1 oder 2, dadurch gekennzeichnet, daß man als Komponente (B) säurekatalytisch oder enzymatisch abgebaute Stärken einsetzt.

5. Verwendung der Pfropfcopolymerisate nach Anspruch 1 als Zusatz zu Wasch- und Reinigungsmitteln in Mengen von 0,1 bis 20 Gew.%, bezogen auf die jeweiligen Formulierungen.

## Claims

### Claims for the following Contracting States : BE, CH, LI, DE, FR, GB, IT, NL, SE

1. A graft copolymer of monosaccharides, oligosaccharides, polysaccharides and the derivatives indicated under (B), which is obtainable by free radical-initiated copolymerization of

   (A) a monomer mixture comprising

   (a) from 90 to 10% by weight of a monoethylenically unsaturated $C_4$- to $C_8$-dicarboxylic acid, or an anhydride, alkali metal salt and/or ammonium salt thereof,
   (b) from 10 to 90% by weight of acrylic acid, methacrylic acid, dimethylacrylic acid, ethylacrylic acid, allylacetic acid, vinylacetic acid or a mixture thereof or an alkali metal salt and/or ammonium salt thereof,
   (c) from 0 to 40% by weight of another monoethylenically unsaturated monomer which can be copolymerized with monomers (a) and (b), and
   (d) from 0 to 5% by weight of a monomer containing two or more ethylenically unsaturated, non-conjugated double bonds in the molecule,

   in the presence of

   (B) a monosaccharide, oligosaccharide, polysaccharide, oxidatively, hydrolytically or enzymatically degraded polysaccharide, oxidized, hydrolytically or enzymatically degraded polysaccharide, or chemically modified monosaccharide, oligosaccharide or polysaccharide, or a mixture of said compounds,

   in the weight ratio (A):(B) of (95 to 20):(5 to 80).

2. A process for the preparation of a graft copolymer of a monosaccharide, polysaccharide or derivative thereof, by free radical-initiated copolymerization of (A) from 95 to 20% by weight of an ethylenically unsaturated monomer in the presence of (B) from 5 to 80% by weight of one or more monosaccharide, oligosaccharide, polysaccharide, degraded or chemically modified monosaccharide, oligosaccharide or polysaccharide or a mixture thereof, in an inert diluent at up to 180°C, which comprises employing as ethylenically unsaturated monomers (A), mixtures of

   (a) from 90 to 10% by weight of a monoethylenically unsaturated $C_4$- to $C_8$-dicarboxylic acid, or an anhydride, alkali metal salt and/or ammonium salt thereof,
   (b) from 10 to 90% by weight of acrylic acid, methacrylic acid, dimethylacrylic acid, ethylacrylic acid, allylacetic acid, vinylacetic acid or a mixture thereof or an alkali metal salt and/or ammonium salt thereof,
   (c) from 0 to 40% by weight of another monoethylenically unsaturated monomer which is copolymerizable with monomers (a) and (b), and
   (d) from 0 to 5% by weight of a monomer containing two or more ethylenically unsaturated, non-conjugated double bonds in the molecule.

3. A process as claimed in claim 2, wherein, in the graft copolymerization, the monomer (a) and at least some of the compound of component (B) are initially introduced in an aqueous medium, and the monomer (b) and, if used, the monomers (c) and/or (d) are added continuously or in portions together with the remainder, if any, of the compound of component (B), to the reaction mixture to be polymerized, and the mixture is copolymerized in such a manner that the degree of neutralization of the copolymerized monomer units (a) and (b) and, if used, (c) on completion of the graft copolymerization is from 20 to 80%.

4. A process as claimed in claim 3, wherein a water-insoluble polysaccharide is first converted in aqueous suspension into a water-soluble or water-dispersible form with addition of an enzyme and/or an acid or by thermal and/or mechanical treatment, and the resultant aqueous solution or dispersion of the degraded polysaccharide is subjected to the graft copolymerization.

5. A process as claimed in claim 2 or 3, wherein component (B) is a starch which has been degraded enzymatically or by acid catalysis.

6. The use of a graft copolymer as claimed in claim 1 as an additive for detergents and cleaners in amounts of from

0.1 to 20% by weight, based on the particular formulation.

**Claims for the following Contracting State : ES**

1. A process for the preparation of a graft copolymer of a monosaccharide, polysaccharide or the derivative indicated under (B), by free radical-initiated copolymerization of (A) from 95 to 20% by weight of an ethylenically unsaturated monomer in the presence of (B) from 5 to 80% by weight of one or more monosaccharide, oligosaccharide, polysaccharide, degraded or chemically modified monosaccharide, oligosaccharide or polysaccharide or a mixture thereof, in an inert diluent at up to 180°C, which comprises employing as ethylenically unsaturated monomers (A), mixtures of

   (a) from 90 to 10% by weight of acrylic acid, methacrylic acid, dimethylacrylic acid, ethylacrylic acid, allylacetic acid, vinylacetic acid or a mixture thereof or an anhydride, alkali metal salt and/or ammonium salt thereof,
   (b) from 10 to 90% by weight of acrylic acid, methacrylic acid, dimethylacrylic acid, ethylacrylic acid, allylacetic acid, vinylacetic acid or a mixture thereof or an alkali metal salt and/or ammonium salt thereof,
   (c) from 0 to 40% by weight of another monoethylenically unsaturated monomer which is copolymerizable with monomers (a) and (b), and
   (d) from 0 to 5% by weight of a monomer containing two or more ethylenically unsaturated, non-conjugated double bonds in the molecule.

2. A process as claimed in claim 1, wherein, in the graft copolymerization, the monomer (a) and at least some of the compound of component (B) are initially introduced in an aqueous medium, and the monomer (b) and, if used, the monomers (c) and/or (d) are added continuously or in portions together with the remainder, if any, of the compound of component (B), to the reaction mixture to be polymerized, and the mixture is copolymerized in such a manner that the degree of neutralization of the copolymerized monomer units (a) and (b) and, if used, (c) on completion of the graft copolymerization is from 20 to 80%.

3. A process as claimed in claim 2, wherein a water-insoluble polysaccharide is first converted in aqueous suspension into a water-soluble or water-dispersible form with addition of an enzyme and/or an acid or by thermal and/or mechanical treatment, and the resultant aqueous solution or dispersion of the degraded polysaccharide is subjected to the graft copolymerization.

4. A process as claimed in claim 1 or 2, wherein component (B) is a starch which has been degraded enzymatically or by acid catalysis.

5. The use of a graft copolymer as claimed in claim 1 as an additive for detergents and cleaners in amounts of from 0.1 to 20% by weight, based on the particular formulation.

**Revendications**

**Revendications pour les Etats contractants suivants : BE, CH, DE, FR, GB, IT, LI, NL, SE**

1. Copolymères de greffage de monosaccharides, d'oligosaccharides, de polysaccharides et de leurs dérivés indiqués sous (B), caractérisés en ce qu'on peut les obtenir par la copolymérisation amorcée par voie radicalaire

   (A) de mélanges de monomères constitués de

      (a) 90 à 10% en poids d'acides dicarboxyliques en $C_4$ à $C_8$ monoéthyléniquement insaturés, leurs anhydrides ou sels de métaux alcalins et/ou d'ammonium,
      (b) 10 à 90% en poids d'acide méthacrylique, d'acide, acrylique, d'acide diméthylacrylique, d'acide éthylacrylique, d'acide allylacétique, d'acide vinylacétique, leurs mélanges, ou leurs sels de métaux alcalins et/ou d'ammonium,
      (c) 0 à 40% en poids d'autres monomères monoéthyléniquement insaturés, qui sont copolymérisables avec les monomères (a) et (b) et
      (d) 0 à 5% en poids de monomères présentant au moins deux doubles liaisons éthyléniquement insaturées et non conjuguées dans la molécule,

en présence

(B) de monosaccharides, d'oligosaccharides, de polysaccharides, de polysaccharides dégradés par voie oxydante, hydrolytique ou enzymatique, de polysaccharides dégradés par voie hydrolytique oxydés ou par voie enzymatique oxydés, de mono-, oligo- et polysaccharides chimiquement modifiés, ou de mélanges des composés précités,

dans le rapport pondéral (A):(B) de (95 à 20):(5 à 80).

**2.** Procédé de préparation de copolymères greffés de monosaccharides, de polysaccharides et de leurs dérivés par la copolymérisation amorcée par voie radicalaire de (A) 95 à 20% en poids de monomères éthyléniquement insaturés en présence de (B) 5 à 80% en poids d'au moins un monosaccharide, un oligosaccharide, un polysaccharide, un mono-, oligo- et polysaccharide dégradé ou chimiquement modifié, ou de leurs mélanges, dans un diluant inerte, à des températures allant jusqu'à 180°C, caractérisé en ce que l'on utilise, à titre de monomères éthyléniquement insaturés (A), des mélanges de

(a) 90 à 10% en poids d'acides dicarboxyliques en $C_4$ à $C_8$ monoéthyléniquement insaturés, leurs anhydrides ou sels de métaux alcalins et/ou d'ammonium,
(b) 10 à 90% en poids d'acide acrylique, d'acide méthacrylique, d'acide diméthylacrylique, d'acide éthylacrylique, d'acide allylacétique, d'acide vinylacétique, leurs mélanges ou leurs sels de métaux alcalins et/ou d'ammonium,
(c) 0 à 40% en poids d'autres monomères monoéthyléniquement insaturés, qui sont copolymérisables avec les monomères (a) et (b) et
(d) 0 à 5% en poids de monomères présentant au moins deux doubles liaisons éthyléniquement insaturées et non conjuguées dans la molécule.

**3.** Procédé suivant la revendication 2, caractérisé en ce que, au cours de la copolymérisation de greffage, on dispose au préalable les monomères (a) et au moins une partie des composés du composant (B) dans un milieu aqueux et on ajoute les monomères (b), ainsi qu'éventuellement les monomères (c) et/ou (d), de manière continue ou discontinue, en même temps que la quantité résiduelle éventuellement encore présente de composés du composant (B) au mélange réactionnel en cours de polymérisation et on procède à la copolymérisation en une manière telle que le degré de neutralisation des unités monomériques incorporées par polymérisation (a) et (b) et éventuellement (c) varie de 20 à 80% après l'arrêt de la copolymérisation de greffage.

**4.** Procédé suivant la revendication 3, caractérisé en ce que l'on transforme un polysaccharide insoluble dans l'eau d'abord en suspension aqueuse et en recourant à l'addition d'enzymes et/ou d'acides ou par traitement thermique et/ou mécanique en une forme soluble dans l'eau ou dispersible dans l'eau et on soumet la solution aqueuse ou la dispersion aqueuse ainsi obtenue du polysaccharide dégradé à la copolymérisation de greffage.

**5.** Procédé suivant la revendication 2 ou 3, caractérisé en ce que l'on utilise des amidons dégradés par voie catalytique acide ou par voie enzymatique à titre de composant (B).

**6.** Utilisation des copolymères de greffage suivant la revendication 1, à titre d'additifs pour des agents de nettoyage et de lavage en proportions de 0,1 à 20% en poids, par rapport aux compositions concernées.

**Revendications pour l'Etat contractant suivant : ES**

**1.** Procédé de préparation de copolymères de greffage de monosaccharides, de polysaccharides et de leurs dérivés indiqués sous (B), par la copolymérisation amorcée par voie radicalaire de (A) 95 à 20% en poids de monomères éthyléniquement insaturés en présence de (B) 5 à 80% en poids d'au moins un monosaccharide, un oligo-saccharide, un polysaccharide, un mono-, oligo- et polysaccharide dégradé ou chimiquement modifié ou leurs mélanges dans un diluant inerte à des températures allant jusqu'à 180°C, caractérisé en ce que l'on utilise, à titre de monomères éthyléniquement insaturés (A), des mélanges de

(a) 90 à 10% en poids d'acides dicarboxyliques en $C_4$ à $C_8$ monoéthyléniquement insaturés, leurs anhydrides ou sels de métaux alcalins et/ou d'ammonium,
(b) 10 à 90% en poids d'acide acrylique, d'acide méthacrylique, d'acide diméthylacrylique, d'acide éthylacrylique, d'acide allylacétique, d'acide vinylacétique, leurs mélanges ou leurs sels de métaux alcalins et/ou d'ammonium,

(c) 0 à 40% en poids d'autres monomères monoéthyléniquement insaturés, qui sont copolymérisables avec les monomères (a) et (b) et

(d) 0 à 5% en poids de monomères présentant au moins deux doubles liaisons éthyléniquement insaturées et non conjuguées dans la molécule.

**2.** Procédé suivant la revendication 1, caractérisé en ce que, au cours de la copolymérisation de greffage, on dispose au préalable les monomères (a) et au moins une partie des composés du composant (B) dans un milieu aqueux et on ajoute les monomères (b), ainsi qu'éventuellement les monomères (c) et/ou (d), de manière continue ou discontinue, en même temps que la quantité résiduelle éventuellement encore présente de composés du composant (B) au mélange réactionnel en cours de polymérisation et on procède à la copolymérisation en une manière telle que le degré de neutralisation des unités monomériques incorporées par polymérisation (a) et (b) et éventuellement (c) varie de 20 à 80% après l'arrêt de la copolymérisation de greffage.

**3.** Procédé suivant la revendication 2, caractérisé en ce que l'on transforme un polysaccharide insoluble dans l'eau d'abord en suspension aqueuse et en recourant à l'addition d'enzymes et/ou d'acides ou par traitement thermique et/ou mécanique en une forme soluble dans l'eau ou dispersible dans l'eau et on soumet la solution aqueuse ou la dispersion aqueuse ainsi obtenue du polysaccharide dégradé à la copolymérisation de greffage.

**4.** Procédé suivant la revendication 1 ou 2, caractérisé en ce que l'on utilise des amidons dégradés par voie catalytique acide ou par voie enzymatique à titre de composant (B).

**5.** Utilisation des copolymères de greffage suivant la revendication 1, à titre d'additifs pour des agents de nettoyage et de lavage en proportions de 0,1 à 20% en poids, par rapport aux compositions concernées.